# EUROPEAN PATENT APPLICATION

(11) **EP 1 693 410 A2**
(43) Date of publication of application: **23.08.2006**
(21) Application number: 06003493.1
(22) Date of filing: 21.02.2006
(51) Int. Cl.: C08L 5/00, C08L 3/00, C08L 1/08

(54) **Hydrophilic film, and planographic printing material, stain-preventative member and defogging member using the same**

(30) Priority: 22.02.2005 JP 2005045648; 30.03.2005 JP 2005098790; 31.01.2006 JP 2006023364
(71) Applicant: FUJI PHOTO FILM CO., LTD., Minami-Ashigara-shi, Kanagawa (JP)
(72) Inventor: Shimada, Kazuto, Yoshida-cho, Haibara-gun, Shizuoka-ken (JP); Hoshi, Satoshi, Yoshida-cho, Haibara-gun, Shizuoka-ken (JP); Yamasaki, Sumiaki, Yoshida-cho, Haibara-gun, Shizuoka-ken (JP)
(74) Representative: HOFFMANN EITLE

(57) **Abstract**

The invention provides a hydrophilic film obtained by curing, by at least one energy source selected from heat and light, a composition comprising a compound that has, in a molecule thereof, two or more ring structures selected from the group consisting of five-membered structures and six-membered structures, wherein the ring structures have a hydrophilic group. The invention further provides a planographic printing material having at least a substrate and the hydrophilic film formed on the substrate. The invention further provides a method for forming a planographic printing plate including at least forming an ink receiving portion on a planographic printing material by applying a hydrophobic material by an ink jet recording process.

## Description

### BACKGROUND OF THE INVENTION

### Field of Invention

The invention relates to a hydrophilic film, a planographic printing plate precursor material having the hydrophilic film, a method for manufacturing a planographic printing plate using the planographic printing plate precursor material, a stain-preventative member having the hydrophilic film and a defogging member having the hydrophilic film.

### Description of the Related Art

Planographic printing is a printing method that uses a plate material that has a lipophilic region that receives ink and an ink-repelling region (hydrophilic region) that does not receive ink but receives dampening water and, at present, a photosensitive planographic printing plate precursor (PS plate) is widely used. A PS plate which is obtained by disposing a photosensitive layer on a substrate such as an aluminum plate is in widespread practical use. A photosensitive layer of a non-image portion of the PS plate is removed by image exposure and development, and the hydrophilicity of thea surface of the substrate and the lipophilicity of the photosensitive layer of an image portion are utilized for printing. In order to prevent the non-image portion from being stained, high hydrophilicity is required for the surface of the substrate of such a plate material.

On the other hand, planographic printing plates for Computer-to-Plate system, technology thereof has been dramatically developing, have been widely investigated. Among these, a planographic printing plate precursor that requires no developing process, which can be attached to a printer without any developing process after exposure and used for printing has been investigated aiming at streamlining of processes and solving a problem of waste treatment, and various methods have been proposed. One of the methods for eliminating a developing process is called as developing-on-press, which includes attaching an exposed planographic printing plate precursor on a cylinder of a printer and supplying dampening water and ink thereto while revolving the cylinder to remove a non-image portion of the planographic printing plate precursor. Namely, it is a method in which a planographic printing plate precursor is directly attached to a printer after completion of exposure and is treated by conventional printing steps.
As a planographic printing plate precursor which does not need a developing process, for example, WO94/23954 suggests a planographic printing plate precursor including a substrate and a hydrophilic layer provided thereon, the layer has been crosslinked and includes a microcapsulated heat melting substance. In this printing plate, microcapsules are collapsed by the action of heat generated in a laser exposure area, whereby a lipophilic substance in the capsules elutes and makes the surface of the hydrophilic layer hydrophobic. This planographic printing plate precursor requires no developing process. However, it has a problem that a hydrophilicity and durability of the hydrophilic layer provided on the substrate is insufficient, which gradually leads to formation of dirt on non-image portions.

A hydrophilic layer obtained by curing acrylamide-hydroxyethyl acrylate copolymer with a methylol melamine cross-linking agent (for example, Japanese Patent Application Laid-open (JP-A) No. 2002-370467), a hydrophilic layer with gelatin or polyvinyl alcohol (for example, JP-A No. 11-95417) and a hydrophilic layer made of a quaternary ammonium salt polymer (for example, Japanese National Phase Publication No. 2003-527978) have been proposed in view of improving the hydrophilicity and the durability. These have to some extent achieved improvements of the hydrophilicity of a polymer or a cross-linking structure thereof. However, from a practical viewpoint, the hydrophilicity is insufficient for use as a printing plate, and a material that is satisfactory in terms of not becoming contaminated when left standing fouls and the ink repellency during the printing process has not yet been obtained. In view of such present circumstances, a substrate on a surface of which a hydrophilic polymer is directly bonded has been proposed (for example, JP-A No. 2003-63166). A hydrophilic layer on the surface of the substrate certainly achieves high hydrophilicity and has excellent performance as a general planographic printing plate substrate. However, when it is used to incorporate a hydrophobic material such as microcapsules, there is the problem that handling is difficult in terms of, for example, preparation for film formation becoming more difficult.

It is well known that hydrophilic film layers can also be used for forming hydrophilic members having stain-preventative property and/or defogging property. Various techniques for preventing adhering of oily stain to a surface of a member have been proposed. In partiular, optical members such as anti-reflection film, optical filter, optical lens, spectacle lens, mirror or the like are desired to be subjected to effective stain-preventative treatment since functions thereof are deteriorated by adhering of stains such as fingerprints, sebum, sweat, cosmetics or the like, and removal of such stains is difficult. In addition, there has been increased utilization of displays outdoors along permeation of mobile gadgets. When displays are used in a condition in which outdoor incident light is applied thereto, the incident light causes specular reflection, and the reflected light is mixed with display light so as to make displayed images hardly visible. Thus, anti-reflection optical members are often provided on display surfaces.
Known examples of such anti-reflection optical members include a lamination in which a layer formed of metal oxides and the like and having high refractive index and a layer having low refractive index are laminated on a surface of a transparent substrate, a member in which a single layer formed of organic or inorganic fluorine compond and the like and having low refractive index is formed on a surface of a transparent substrate, a member in which a coating film containing transparent particles is formed on a surface of a transparent plastic film substrate and has an effect of irregular reflection due to its uneven surface, and the like. As in the case for the above-described optical members, stains such as fingerprints or sebum tend to adhere to the surfaces of these anti-reflection optical members due to handling thereof. Such anti-reflection optical members have problems such as difficulty of removing stains due to slight unevenness usually occuring on the surface of anti-reflection films, in addition to a problem of outstanding of only the stained portions becoming highly reflective, which makes the stains stand out even more.
Various techniques have been proposed, such as making a surface of a solid member less prone to stain, or to facilitate removal of stains by imparting, onto the surface thereof, a stain-preventative function. Specific examples of a member combining an anti-reflection member and a stain-preventative member include a rub-resistant material having stain-preventative property and rub-resistant property which is characterized by having an anti-reflection film mainly formed of silicon dioxide and treated with a compound containing an organic silicon substrate (for example, see JP-A No. 64-86101), and a CRT filter having stain-preventative property and rub-resistant property which is characterized by having a surface of s substrate coated with an organic polysiloxane having a silanol group at a terminal thereof (for example, see JP-A No. 4-338901). Further, an anti-reflection film containing a silane compound such as those containing polyfluoroalkyl group or the like (for example, see JP-A No. 6-29332) and a combination of an optical thin film mainly composed of silicon dioxide and a copolymer having perfluoroalkylacrylate and a monomer having an alkoxysilane group (for example, see JP-A 7-16940) has been respectively proposed.
However, stain-preventative layers formed by conventional methods have insufficient stain-preventative property, and particularly, it is difficult to remove stains such as fingerprints, sebum, sweat, cosmetics or the like therefrom. Further, there is concern that the stain-preventative property of surface treatments using materials having low surface energy such as fluorine or silicon deteriotrate along with the passage of time. Therefore, development of stain-preventative members having excellent stain-preventative property and durability has been desired.
Resin films which are generally used for surfaces of optical members or the like and inorganic materials such as glass or metals generally have surfaces having hydrophobicity or weak hydrophilicity. When a surface of a substrate formed by using a resin film, an inorganic material or the like is hydrophilized, water drops which adhere to the surface uniformly spread on the surface so as to form a uniform aqueous film, which effectively prevents fogging of glass, lens, mirror or the like so as to work for preventing loss of moisture permeability and ensuring visibility under rainy weather. Further, hydrophobic contaminants such as soot and dust of cities, combustion products contained in automotive exhaust gases such as carbon black, oils and fats, components eluted from sealants or the like hardly adhere to the aqueous film, and even when such hydrophobic contaminants adhere to the surfaces having the aqueous film, the contaminants can be easily removed by rainfall, washing with water or the like. Accordingly, hydrophilization of the surface of a substrate is effective for various applications.
Conventionally-proposed surface treating methods for hydrophilization such as ethcing treatment, plasma treatment or the like can provide highly hydrophilized surfaces. However, the effects achieved by such methods are temporary and cannot maintain a hydrophilic condition for a long period. Further, a surface hydrophilic coating film using a hydrophilic graft polymer as a hydrophilic resin has been proposed (for example, see the news item published in "Chemical Diary" dated January 30, 1995). However, although the coating film exhibits hydrophilicity to a certain extent, compatibility of the coating film with a substrate is insufficient. Accordingly, a means for providing higher durability has been required.
In addition, a film which uses titanium oxide has been conventionally known as a film having excellent surface hydrophilicity. For example, a technique including forming a photocatalyst containing-layer on a surface of a substrate so as to highly hydrophilize the surface in accordance with photoexcitation of a photocatalyst has been disclosed, and it has been reported that excellent stain-preventative property can be imparted to various composite materials such as glass, lens, mirror, armoring materials, plumbing components or the like by applying the technique to these comosite materials (for example, see International Publication of PCT/JP96/00733). However, the film using titanium oxide does not have sufficient film strength. Further, the film has a problem in that usage is limited to certain portions since hydrophilic effect thereof cannot be exhibited unless it is subjected to photoexcitation. Accordingly, there is a need for a stain-preventative member having function sustainability as well as favorable rub-resistant property.

### SUMMARY OF THE INVENTION

Taking the above-described conventional problems into account, the invention provides a hydrophilic film having a surface hydrophilicity and an excellent surface hydrophilicity durability. Further, the invention provides a planographic printing plate precursor material having the hydrophilic film, and a method for manufacturing a planographic printing plate that provides an non-image portion which has an excellent hydrophilicity and durability by using the planographic printing plate precursor material.

The present invention considers the above-described conventional problems and uses a coating film that is obtained by cross-linking (curing) a compound having plural ring structures having a specific hydrophilic group(s).
Namely, the present invention provides a hydrophilic film obtained by curing, by at least one energy source selected from heat and light, a composition comprising a compound that has, in a molecule thereof, two or more ring structures selected from the group consisting of five-membered structures and six-membered structures, wherein the ring structures have a hydrophilic group.
In view of improving toughness and durability of the hydrophilic film, it is preferable that the composition for forming the hydrophilic film further comprises a (B) cross-linking agent.
It is preferable that the cross-linking agent is an alkoxide compound (hereinafter sometimes referred to as a "(B) specific alkoxide") comprising at least an element that is selected from the group consisting of Si, Ti, Zr and Al.
Further, in view of improving toughness and durability of the hydrophilic film, it is preferable that the composition for forming the hydrophilic film further comprises a (C) hydrophilic polymer.
Furthermore, it is preferable that the (C) hydrophilic polymer comprises a structure represented by the following Formula (1). 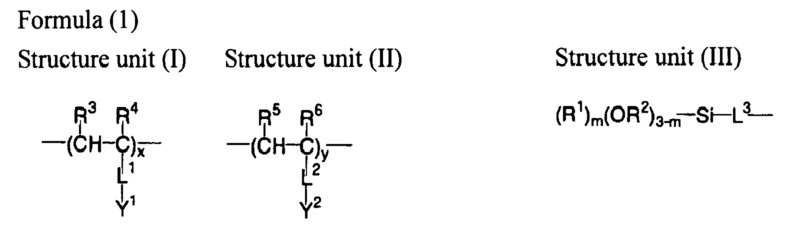 In Formula (1), a silane coupling group represented by Structure unit (III) is present at an end of a polymer made of a polymer unit represented by Structure unit (I) or (II); each of R¹, R², R³, R⁴, R⁵ and R⁶ independently represents a hydrogen atom or a hydrocarbon group having 1 to 8 carbon atoms; m represents 0, 1 or 2; n represents an integer from 1 through 8; x and y represent composition ratios when x + y = 100; a ratio of x:y is in a range of 100:0 to 1:99; each of L¹, L² and L³ independently represents a single bond or an organic linking group; and each of Y¹ and Y² independently represents -N(R⁷)(R⁸), -OH, -NHCOR⁷, -COR⁷, -CO₂M or -SO₃M, wherein each of R⁷ and R⁸ independently represents a hydrogen atom or a hydrocarbon group having 1 to 8 carbon atoms and M represents a hydrogen atom, an alkaline metal, an alkaline earth metal or onium.

Examples of the (A) specific hydrophilic compound include a hydrophilic saccharide, a starch derivative and a cellulose derivative, having a five-membered ring structure having a hydrophilic group and/or a six-membered ring structure having a hydrophilic group. Although the mechanism by which a highly hydrophilic and highly strong film can be obtained by using the (A) specific hydrophilic compound such as the hydrophilic saccharides is not clear, it is estimated that since the saccharide and cellulose derivative, for example, have many hydrophilic groups in one unit thereof and form a ring structure, the hydrophilic groups are directed toward the outside of the ring structure, and accordingly, when the film is formed with such a compound, the surface of the film exhibits a high hydrophilicity. Furthermore, the hydrophilic group in such saccharides exhibits the structure of alcohol or carboxylic acid in many cases. Accordingly, in a preferable embodiment of the invention, it is conceivable that when the (B) cross-linking agent is present as a cross-linking component, these hydrophilic groups and the cross-linking agent have high reactivity when the film is formed, and thus a resulting film would exhibit excellent curability. In particular, when the specific alkoxide coexists as the (B) cross-linking agent, these hydrophilic groups (preferably hydroxy groups) and the (B) specific cross-linking component would exhibit high reactivity and, in addition to cross-linking (A) and (B), the (B) cross-linking agents (the specific alkoxides) would form cross-links between each other owing to hydrolytic polycondensation thereof so as to form a dense cross-linking structure, and thus the resulting cured film exhibits excellent strength and durability.

The hydrophilic film according to the invention, being highly hydrophilic in its surface and excellent in the strength and the durability, can be used in various applications that require hydrophilicity at the surface. Among these, the hydrophilic film is useful in forming a hydrophilic region of a planographic printing plate.
That is, in a preferable aspect of the invention a material that is changed from hydrophilic to hydrophobic by an energy ray is contained in the hydrophilic film. When the material is contained in the hydrophilic film, only a region where energy is irradiated can be rendered a hydrophobic region, thus a hydrophilic film where a hydrophobic region can be formed in a given region can be obtained. Accordingly, use of the hydrophilic film further makes it possible to obtain a planographic printing plate by forming hydrophilic/hydrophobic region imagewise.

Furthermore, the invention provides a planographic printing material having the hydrophilic film on a substrate. Such a planographic printing material provides excellent hydrophilic surface properties on the substrate. Accordingly, a planographic printing plate can be prepared when a hydrophobic ink-receiving region is formed on the surface thereof by some means.

The method of preparing a planographic printing plate provided by the invention is one example of such methods, and includes applying, on a substrate, a hydrophobic material to a planographic printing material formed by forming the hydrophilic film of the invention, by an inkjet recording method so as to form an ink-receiving region.
One of the ink jet recording methods is a recording method which uses an ink jet recording ink that can be cured by irradiation of a radioactive ray. For example, a UV-curable ink jet method is recently gathering attention because it is relatively low in odor, fast-drying and can be recorded on a hydrophilic film low in ink absorptivity.
When such ink jet recording ink is imagewise applied to a planographic printing material that uses a highly hydrophilic film according to the invention followed by curing to form an image portion, a planographic printing plate that can form an excellent printing image owing to the hydrophobicity of the UV-curable ink and high hydrophilicity of the hydrophilic film can be easily prepared.
The present invention further provides a member having a stain-preventative property and/or a defogging property, wherein the member comprises a substrate and the hydrophilic film described above.

### DETAILED DESCRIPTION OF PREFERRED EMBODIMENTS

The hydrophilic film of the present invention is a hydrophilic film obtained by curing, by at least one energy source selected from heat and light, a composition comprising a compound that has, in a molecule thereof, two or more ring structures selected from the group consisting of five-membered structures and six-membered structures, wherein the ring structures have a hydrophilic group.
Hereinafter, the constituent elements of the invention will be described in detail.

### (A) Compound having two or more of five-membered ring or six-membered ring structures having a hydrophilic group

The five-membered ring or the six-membered ring that forms a primary structure of such a (A) specific hydrophilic compound can be formed from atoms arbitrarily selected from the group consisting of a carbon atom, an oxygen atom, a nitrogen atom and a sulfur atom. Further, a plurality of five-membered rings and six-membered rings can be linked with each other through a carbon atom, an oxygen atom, a nitrogen atom, a sulfur atom, or a linking group obtained by combining any of a carbon atom, an oxygen atom, a nitrogen atom, a sulfur atom and a hydrogen atom.

Examples of the compound that has, in a (A) molecule of the (A) specific hydrophilic compound used in the invention, two or more ring structures selected from a five-membered ring structure and a six-membered ring structure, the ring structure having a hydrophilic group, include those obtained by linking two or more compounds having a ring structure such as a monosaccharide such as glucose, fructose, mannose, galactose, gulose, allose, idode, xylose, ribose, arabinose, lyxose, erythrose or threose, a disaccharide such as maltose, cellobiose, lactose, sucrose or saccharose, or gentianose through a linking group having a methylene group, an ether group, an ester group, an amide group, an amino group, a thioether group, an aryl group, an urethane group or an urea group.
Furthermore, the saccharides may have a substituent group such as an alkyl group, an alkenyl group, an alkynyl group, an alkoxy group, an aryl group, a heterocyclic group, a hydroxyl group, a carboxyl group, an amino group, an ethyleneoxy group, a sulfonate group, a phosphate group, an urethane group, an urea group, a thiol group, an acetal group, or a substituent group obtained by combining these.
Examples of the (A) specific hydrophilic compound further include a polymer compound in which many ring structures having a hydrophilic group are linked such as cellulose derivatives and starch derivatives.

It is necessary that the (A) specific hydrophilic compound has a hydrophilic group in a ring structure thereof. Examples of the hydrophilic group include a hydroxyl group, a carboxyl group, an amino group, an ethyleneoxy group, a sulfonate group, a phosphate group, a urethane group, a urea group, a thiol group and a sulfate group. These may be directly linked with a five-membered group or a six-membered group, or may be linked through a methylene group, a methyleneoxy group, or an aryl group to form a ring structure as needs arise. Further, among the above-mentioned hydrophilic groups, the hydroxyl group, the carboxyl group, the sulfonate group, the phosphate group, the thiol group and the sulfate group may be used in a protic form or a form neutralized with a base.
Furthermore, the amino group may be an ammonium group neutralized with acid.

Followings are specific examples of the (A) specific hydrophilic compounds that can be used in the invention; however, the invention is not limited thereto.
Examples of the (A) specific hydrophilic compound include hydroxymethyl cellulose, hydroxypropyl cellulose, carboxymethyl cellulose or salts thereof, methyl cellulose, carrageenin, maltoheptaose, maltohexaose, nistose, raffinose, panose, chitin, chitosan, pectic acid, pentosan, pentose, cellulose triacetate, hydroxypropylmethyl cellulose, phthalate, dextrin, cellulose nitrate, cellulose acetate, cellulose carbamate, cyanoethyl cellulose, ethylhydroxyethyl cellulose, a copolymer between gulcuronic acid and N-acetyl glucosamine, chondroitin 6-sulfate hexasaccharide, heparin, dextran sulfate, carotin sulfate, maltodextrin sulfate, hemicellulose sulfate, alginic acid, sodium alginate, N-dicarboxyethylaminoethyl cellulose, diethylaminoethyl cellulose, ethyl sulfonate, N-(o-carboxyphenyl)aminodeoxy cellulose, s-(o-carboxyphenyl)mercaptodeoxy cellulose, hydrazinodecoxy cellulose, amylose, methyl amylose, starch, carboxy methyl starch, starch phosphate, starch acetate, hydroxypropyl starch, acrylate grafted starch, pullulan, curdlan, xanthan gum, durangum, guar gum, gum arbic, carrageenan, and heparan sulfate.

A embodiment of the (A) specific hydrophilic compound that is preferable from a viewpoint of the hydrophilicity include those in which the ring structure thereof has at least one of a hydroxyl group, a carboxylate group, a sulfonate group, a phosphate group, a sulfate group and salts thereof. The (A) specific hydrophilic compound is most preferably a compound that has a sugar structure having a -SO₃- structure or a -OSO₃- structure. The ring structure has at least one hydrophilic group, and may have a plurality of hydrophilic groups. In a case when the ring structure has a plurality of hydrophilic groups, the five-membered ring and/or six-membered ring may have a plurality of one kind of hydrophilic groups o or may have a plurality of hydrophilic groups which are different from each other. From a viewpoint of effects, the ring structure of the (A) specific hydrophilic compound preferably has a plurality of hydrophilic groups, in which the hydrophilic groups are combinations of a hydroxyl group and a carboxylate group, a hydroxyl group and a phosphate group, or a hydroxyl group and a sulfate group.

The (A) specific hydrophilic compound may be used singly or in a combination of two or more thereof.
An amount of the (A) specific hydrophilic compound used in the composition used for forming a hydrophilic film according to the invention as a non-volatile component thereof is preferably in a range of 10 to 80% by mass, and more preferably in a range of 25 to 50% by mass relative to a total amount of the composition used for forming the hydrophilic film. The ranges are preferable since excellent film strength, the film characteristics, and no fear of causing a crack or so in the film can be obtained.

### (B) Cross-linking Agent

From viewpoints of the strength and the durability, the formed hydrophilic film of the invention preferably contains, in a composition for forming the hydrophilic film, a (B) cross-linking agent in addition to the (A) specific hydrophilic compound.
Examples of the (B) cross-linking agents that can be applied to the invention include conventionally-known cross-linking agents that can form a cross-link by heat. As general cross-linking agent, there are ones described in Shinzo Yamashita and Tosuke Kaneko, *Kakyozai Handobukku (Cross-linking Agent Handbook)* (Taiseisha, 1981). There is no particularl restriction for the cross-linking agent used in the invention as far as it has two or more functional groups and can effectively form a cross-link with a hydrophilic polymer. However, Aldehydeketone can be used as a cross-linking agent according to the invention when it has at least one functional group.
Examples of specific thermal cross-linking agents include α, ω-alkane or alkene dicarboxylic acid such as 1,2-ethanedicarboxylic acid or adipic acid; polycarboxylic acids such as 1,2,3-propanetricarboxylic acid, 1,2,3,4-butanetetracarboxylic acid, trimellitic acid or polyacrylic acid; polyamine compounds such as 1,2-ethanediamine, diethylediamine, diethylenetriamine or polyethyleneimine; polyepoxy compounds such as ethylene or propylene glycol diglycidyl ether, tetraethylene glycol diglycidyl ether, nonaethylene glycol diglycidyl ether, polyethylene or polypropylene glycol glycidyl ether, neopentyl glycol diglycidyl ether, 1,6-hexanediol diglycidyl ether, trimethylolpropane triglycidyl ether or sorbitol polyglycidyl ether;

oligoalkylene or polyalkylene glycols such as ethylene glycol, propylene glycol, diethylene glycol or tetraethylene glycol; polyhydroxy compounds such as trimethylol propane, glycerin, pentaerythritol, sorbitol or polyvinyl alcohol; polyaldehyde compounds such as glyoxal, terephthalic aldehyde, acetaldehyde or benzaldehyde; polyisocyanate compounds such as trilene diisocyanate, hexamethylene diisocyanate, diphenylmethane isocyanate, xylene diisocyanate, polymethylene polyphenyl isocyanate, cyclohexyl diisocyanate, cyclohexanephenylene diisocyanate, naphthalene-1,5-diisocyanate, isopropylbenzene-2,4-diisocyanate or polypropylene glycol/trilene diisocyanate adduct; silane-coupling agents such as block polyisocyanate compounds or tetraalkoxysilane; metal cross-linking agents such as acetyl acetonates of aluminum, copper or iron(III); polymethylol compounds such as trimethylol melamine or pentaerythritol; and polythiol compounds such as dithioerythritol, 1,2,6-hexanetriol trithioglycolate or pentaerythritol tetrakis (2-mercaptoacetate). Among these thermal cross-linking agents, from viewpoints of easiness in preparing a coating liquid and capability of inhibiting deterioration of the hydrophilicity of the prepared hydrophilic material, the thermal cross-linking agent is preferably an aqueous cross-linking agent.

An amount of the (B) cross-linking agent used in a composition used for forming a hydrophilic film according to the invention as a non-volatile component is preferably in a range of 0 to 50% by mass, and more preferably in a range of 3 to 30% by mass relative to a total amount of the composition used for forming the hydrophilic film. The (B) cross-linking agents may be used singly or in a combination of two or more thereof. Other than the above, when the (B) cross-linking agent is used, an appropriate structure, a blending formulation and an addition amount thereof can be arbitrarily selected from viewpoints of an extent of polymerization inhibition against oxygen, curing properties, a degree of resolution, fogging properties, a refractive index change, and a surface adhesiveness.

In one preferable embodiment of the invention, a high strength film excellent in the hydrophilicity and the durability can be formed by, in a composition for forming the hydrophilic film, containing the (B) cross-linking component, the specific alkoxide in addition to the (A) specific hydrophilic compound.
The specific alkoxide, namely, an alkoxide compound that contains an element that is selected from a group consisting of Si, Ti, Zr and Al is preferably a compound represented by the following Formula (2). When a cross-linking structure is formed for curing a hydrophilic film, it is preferable that the (A) specific hydrophilic compound and a cross-linking component represented by Formula (2) are mixed and coated on a surface of the substrate further followed by drying.
The cross-linking component represented by Formula (2) is a compound that has a polymerizing functional group in the structure and plays a role of a cross-linking agent. A cross-linking structure is formed by a polycondensation of the cross-linking component and the (A) specific hydrophilic compound or plural of the (B) components which undergo the polycondensation with each other. Furthermore, from viewpoints of further improving the film properties and the hydrophilicity, it is preferable for the composition for forming the hydrophilic film to further contain a (C) hydrophilic polymer described below.

Formula (2) (R^{a})ₘ-X-(OR^{b})₄₋ₘ

In Formula (2), Ra represents a hydrogen atom, an alkyl group or an aryl group; Rb represents an alkyl group or an aryl group; X represents Si, Al, Ti or Zr; and m represents an integer of 0 to 2.
When each of Ra and Rb represents an alkyl group, a number of carbon atoms of the alkyl group is preferably in a range of 1 to 4. The alkyl group or the aryl group may have a substituent. Examples of the substituent that can be introduced include a halogen atom, an amino group and a mercapto group.
The compound represented by Formula (2) is a low molecular weight compound and preferably has a molecular weight of 1000 or less.

Hereinafter, specific examples of the cross-linking components represented by Formula (2) are shown. However, the invention is not restricted thereto.
In the case of X being Si, that is, in the case that the cross-linking component is a hydrolyzing compound which contains Si, examples thereof include trimethoxy silane, triethoxy silane, tripropoxy silane, tetramethoxy silane, tetraethoxy silane, tetrapropoxy silane, methyltrimethoxy silane, ethyltriethoxy silane, propyltrimethoxy silane, methyltriethoxy silane, ethyltriethoxy silane, propyltriethoxy silane, dimethyldimethoxy silane, diethyldiethoxy silane, γ-chloropropyltriethoxy silane, γ-mercaptopropyltriethoxy silane, γ-mercaptopropyltriethoxy silane, γ-aminopropyltriethoxy silane, phenyltrimethoxy silane, phenyltriethoxy silane, phenyltripropoxy silane, diphenyldimethoxy silane and diphenyldiethoxy silane.
Among these, particularly preferable examples thereof include tetramethoxy silane, tetraethoxy silane, methyltrimethoxy silane, ethyltrimethoxy silane, methyltriethoxy silane, ethyltriethoxy silane, dimethyldiethoxy silane, phenyltrimethoxy silane, phenyltriethoxy silane, diphenyldimethoxy silane and diphenyldiethoxy silane.

In the case of X being Al, that is, in the case that the cross-linking component is a hydrolyzing compound which contains aluminum, examples thereof include trimethoxy aluminate, triethoxy aluminate, tripropoxy aluminate and tetraethoxy aluminate.
In the case of X being Ti, that is, in the case that the cross-linking component is a hydrolyzing compound which contains titanium, examples thereof include trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate and phenyltriethoxy titanate can be cited.
In the case of X being Zr, that is, in the case that the cross-linking component is a hydrolyzing compound which contains n zirconium, examples thereof include zirconates corresponding to the compounds exemplified as containing titanium can be cited.

An amount of the specific alkoxide contained in a composition used for forming the hydrophilic film of the invention as a non-volatile component is preferably in a range of 5 to 80% by mass, and more preferably in a range of 20 to 70% by mass relative to a total amount of the composition used for forming the hydrophilic film. The specific alkoxides may be used singly or in a combination of two or more thereof.
Further, the (B) specific alkoxide and the above-mentioned conventionally-known cross-linking agent that forms a cross-linking by heat, acid or radical can be used in combination. When such known cross-linking agent is used in combination, it can be used singly or in combination of two or more thereof. However, an amount thereof in the composition for forming the hydrophilic film of the invention is preferably 50% by mass or less relative to a total amount of the specific alkoxide contained in the composition.

### (C) Hydrophilic Polymer

From a viewpoint of improving the cross-linking density, the composition for forming the hydrophilic film of the invention preferably further contains a (C) hydrophilic polymer.
Examples of the hydrophilic polymers that can be used in the invention include polymers that are formed from monomer raw materials such as acrylic acid esters, methacrylic acid esters, acrylamides, methacrylamides, vinyls or hydrolysates thereof, styrenes, acrylic acids or salts thereof, methacrylic acids or salts thereof, acrylonitrile, maleic anhydrides or maleimides.
In particular, among the monomers, monomers having an amino group, an ammonium group, a hydroxyl group, a sulfoneamide group, a carboxyl group or a salt thereof, a phosphate group or a salt thereof, a sulfonate group or a salt thereof or an ether group (in particular, an ethyleneoxy group) are preferable.
Examples of the hydrophilic polymers further include a hydrophilic polymer having, in a main chain thereof, a urethane bond, or an amide bond, or a urea bond.

Specific examples of acrylic ester include 2-hydroxyethyl acrylate, 2-hydroxypropyl acrylate, 2-hydroxypentyl acrylate, trimethylolpropane monoacrylate, pentaerythritol monoacrylate, hydroxybenzyl acrylate, dihydroxyphenethyl acrylate, furfuryl acrylate, tetrahydrofurfuryl acrylate, sulfamoylphenyl acrylate, 2-(hydroxyphenylcarbonyloxy)ethyl acrylate, diethyleneglycol ethylether acrylate and 2-ethoxyethyl acrylate.

Specific examples of methacrylic esters include 2-hydroxyethyl methacrylate, 2-hydroxypropyl methacrylate, 2-hydroxypentyl methacrylate, trimethylolpropane monomethacrylate, pentaerythritol monomethacrylate, dihydroxyphenethyl methacrylate, furfuryl methacrylate, tetrahydrofurfuryl methacrylate, sulfamoylphenyl methacrylate, 2-(hydroxyphenylcarbonyloxy)ethyl methacrylate, diethyleneglycol ethylether methacrylate, 2-ethoxyethyl methacrylate and methoxytetraethylene glycol monomethacrylate.

Specific examples of acrylamides include acryl amide, N-methylacrylamide, N-ethylacrylamide, N-propylacrylamide, N-butylacrylamide, N-hydroxyethylacrylamide, N-phenylacrylamide, N,N-dimethylacrylamide, N-methyl-N-phenylacrylamide and N-hydroxyethyl-N-methylacrylamide.

Specific examples of methacrylamides include methacryl amide, N-methylmethacrylamide, N-ethylmethacrylamide, N-propylmethacrylamide, N-butylmethacrylamide, N-hydroxyethylmethacrylamide, N-(sulfamoylphenyl)methacrylamide, N-(phenylsulfonyl)methacrylamide, N,N-dimethylmethacrylamide, N-methyl-N-phenylmethacrylamide and N-hydroxyethyl-N-methylmethacrylamide.

### Specific examples of vinyls include vinyl acetate and vinyl pyrrolidone.

Specific examples of styrenes include trimethoxy styrene, carboxy styrene, styrene sulfone and a salt thereof.

Further, from a viewpoint of further improving the characteristics of the hydrophilic film of the invention, at least a specific hydrophilic polymer (hereinafter, appropriately referred to as a "(C-1) specific hydrophilic polymer"), that has a structure represented by the following Structure unit (iii) at one or both terminal end(s) of a polymer represented by the following Formula (1), that is, a polymer containing a polymer unit represented by the following Structure unit (i) and a polymer unit represented by the following Structure unit (ii), is preferably contained therein. The (C-1) specific hydrophilic polymer is characterized by having a silane-coupling group at a terminal end.
It is assumed that when such the (C-1) specific hydrophilic polymer having a silane-coupling group at a terminal end is additionally used, owing to an interaction between the silane-coupling group of the hydrophilic polymer and the cross-linking component, and owing to an interaction between a plurality of the silane coupling groups, a cross-linking structure formed from Si(OR)₄ is formed, and thereby, the strength and the durability of the hydrophilic film owing to a strong cross-linking structure can be improved.

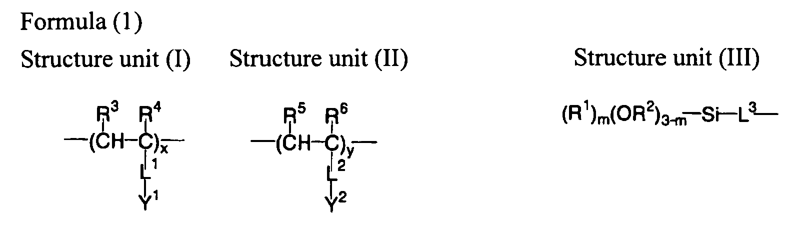

The (C-1) specific hydrophilic polymer necessarily has a silane-coupling group represented by Structure unit (III) at one of both terminal ends of a polymer containing a polymer unit represented by Structure unit (I) and a polymer unit represented by Structure unit (II), and may further have the silane-coupling group, a hydrogen atom or a functional group having the polymerization initiating ability at the other terminal end.
In Structure units (I) to (III), m represents 0, 1 or 2; each of R¹, R², R³, R⁴, R⁵ and R⁶ independently represents a hydrogen atom or a hydrocarbon group having 8 or less carbon atoms. Examples of the hydrocarbon groups include an alkyl group and an aryl group, and preferable examples thereof include a straight chained-, a branched chained- or a cyclic- alkyl group having 8 or less carbon atoms. Specific examples thereof include a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group and a cyclopentyl group.
The R¹ to R⁶ are preferably a hydrogen atom, a methyl group or an ethyl group from viewpoints of advantages and the easy availability.

The hydrocarbon groups may further have a substituent.
When the alkyl group represented by R¹ to R⁶ has a substituent, the alkyl group having a substituent is constituted through a bond between a substituent and an alkylene group. Here, as the substituent, a monovalent non-metal atomic group other than hydrogen is used. Preferable examples of the monovalent non-metal atomic group include a halogen atom (-F, -Br, -C and -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, an ureido group, an N'-alkylureido group, an N',N'-dialkylureido group, an N'-arylureido group, an N',N'-diarylureido group, an N'-alkyl-N'-arylureido group, an N-alkylureido group,

an N-arylureido group, an N'-alkyl-N-alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group,

an alkoxycarbonyl group, an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, an arylsulfonyl group, a sulfo group (-SO₃H) and a conjugated base group thereof (hereinafter referred to as a "sulfonato group"), an alkoxysulfonyl group, an aryloxysulfonyl group, a sulfinamoyl group, an N-alkylsulfinamoyl group, an N,N-dialkylsulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) and a conjugated based group thereof (hereinafter, referred to as "phosphonato group"), a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) and a conjugated base group thereof (hereinafter, referred to as "alkylphosphonato group"), a monoarylphosphono group (-PO₃H(aryl)) and a conjugated base group thereof (hereinafter referred to as an "arylphosphonato group"), a phosphonooxy group (-OPO₃H₂) and a conjugated based group thereof (hereinafter, referred to as "phosphonatoxy group"), a dialkylphosphonoxy group (-OPO₃H(alkyl)₂), a diarylphosphonoxy group (-OPO₃H(aryl)₂), an alkylarylphosphonoxy group (-OPO₃(alkyl)(aryl)), a monoalkylphosphonoxy group (-OPO₃H(alkyl)) and a conjugated base group thereof (hereinafter, referred to as "alkylphosphonatoxy group"), a monoarylphosphonoxy group (-OPO₃H(aryl)) and a conjugated base group thereof (hereinafter referred to as an "arylphosphonatoxy group"), a morpholino group, a cyano group, a nitro group, an aryl group, an alkenyl group, and an alkynyl group.

Specific examples of the alkyl group in these substituents include the foregoing alkyl groups. Specific examples of the aryl group include a phenyl group, a biphenyl group, a naphthyl group, a tolyl 2 group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group and a phosphonatophenyl group. Specific examples of the alkenyl group include a vinyl group, a 1-propenyl group, a 1-butenyl group, a cinnamyl group and a 2-chloro-1-ethenyl group. Further, specific examples of the alkynyl group include an ethynyl group, a 1-propynyl group, a 1-butynyl group and a trimethylsilylethynyl group. Examples of G¹ in an acyl group (G¹CO⁻) include hydrogen and the above alkyl group and aryl group.

Among these substituents, more preferable examples include a halogen atom (-F, -Br, -Cl and -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonato group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonato group, a dialkylphosphono group, a diarylphosphono group, a monoalkylphosphono group, an alkylphosphonato group, a monoarylphosphono group, an arylphosphonato group, a phosphonoxy group, a phosphonatoxy group, an aryl group and an alkenyl group.

On the other hand, examples of the alkylene group in the alkyl group having a substituent include divalent organic residues resulting from elimination of any one of the hydrogen atoms on the foregoing alkyl group having from 1 to 20 carbon atoms, and preferable examples thereof include linear alkylene groups having 1 to 12 carbon atoms, branched alkylene groups having 3 to 12 carbon atoms, and cyclic alkylene groups having 5 to 10 carbon atoms. Specific preferable examples of the alkyl group obtained by combining such a substituent with the alkylene group having a substituent include a chloromethyl group, a bromomethyl group, a 2-chloroethyl group, a trifluoromethyl group, a methoxymethyl group, a methoxyethoxyethyl group, an aryloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxoethyl group, a 2-oxopropyl group, a carboxypropyl group, a methoxycarbonylethyl group, an allyloxycarbonylbutyl group,

a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group and a 3-butynyl group.

L¹ and L² represent a single bond or an organic linking group. Here, the "organic linking group" denotes a polyvalent linking group formed of f non-metal atoms. More specifically, the organic linking group is formed of any of 1 to 60 carbon atoms, 0 to 10 nitrogen atoms, 0 to 50 oxygen atoms, 1 to 100 hydrogen atoms and 0 to 20 sulfur atoms.
More specific examples of the linking group include the following structure units and ones obtained by combining these.

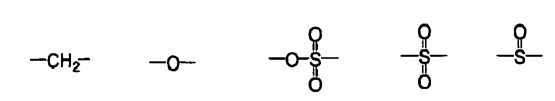

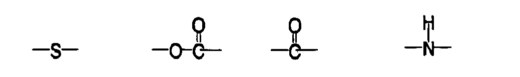

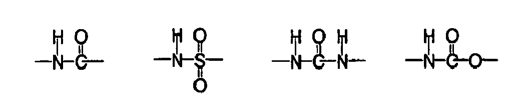

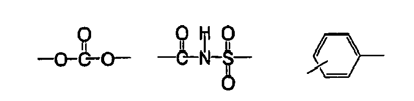

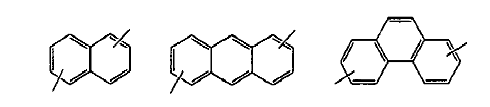

L³ represents a single bond or an organic linking group. Here, the "organic linking group" denotes a polyvalent linking group formed of non-metal atoms. More specifically, the organic linking group is similar to thse described for the foregoing L¹ and L². Among these, particularly preferable examples thereof have a structure represented by -(CH₂)ₙ-S- (n is an integer of 1 to 8).

Further, each of Y¹ and Y² independently represent -NHCOR⁷, -CONH₂, -CON(R⁷)(R⁸), -COR⁷, -OH, -CO₂M or -SO₃M, wherein each of R⁷ and R⁸ independently represents a linear-, branched- or cyclic- alkyl group having 1 to 8 carbon atoms. Still further, in the case that Y¹ or Y² represents -CON(R⁷)(R⁸), R⁷ and R⁸ may be bonded with each other to form a ring, and a thus formed ring may be a hetero ring containing a heteroatom such as an oxygen atom, a sulfur atom or a nitrogen atom. R⁷ and R⁸ may further have a substituent. Examples of the substituents that can be introduced therein include ones cited as the substituents that can be introduced to R¹ through R⁶ when R¹ through R⁶are an alkyl group.

Specific examples of R⁷ and R⁸ include a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group and a cyclopentyl group.
Examples of M include a hydrogen atom; an alkali metal such as lithium, sodium or potassium; an alkaline earth metal such as calcium or barium; and an onium such as ammonium, iodonium or sulfonium.
Specific preferable examples of Y¹ and Y² include -NHCOCH₃, -CONH₂, -COOH, -SO₃⁻NMe₄⁺ and a morpholino group.

x and y represent composition ratios when x + y = 100, a ratio of x:y is in a range of 100:0 to 1:99, and the ratio is preferably in a range of 100: 0 to 5: 95.

A molecular weight of the (C-1) specific hydrophilic polymer is preferably in a range of 1,000 to 100,000, more preferably in a range of 1,000 to 50,000, and most preferably in a range of 1,000 to 30,000.

Specific examples of the (C-1) specific hydrophilic polymer ((1-1) through (1-23)) that can be preferably used in the invention are shown below; however, the invention is not restricted thereto.

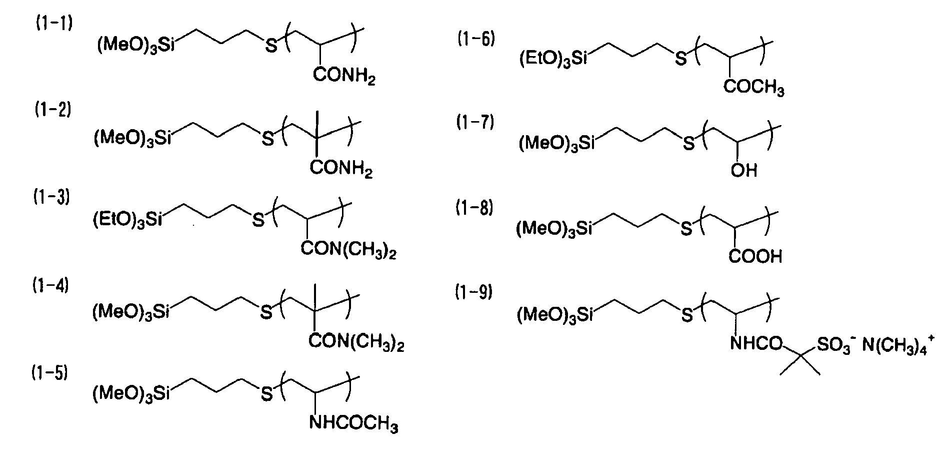

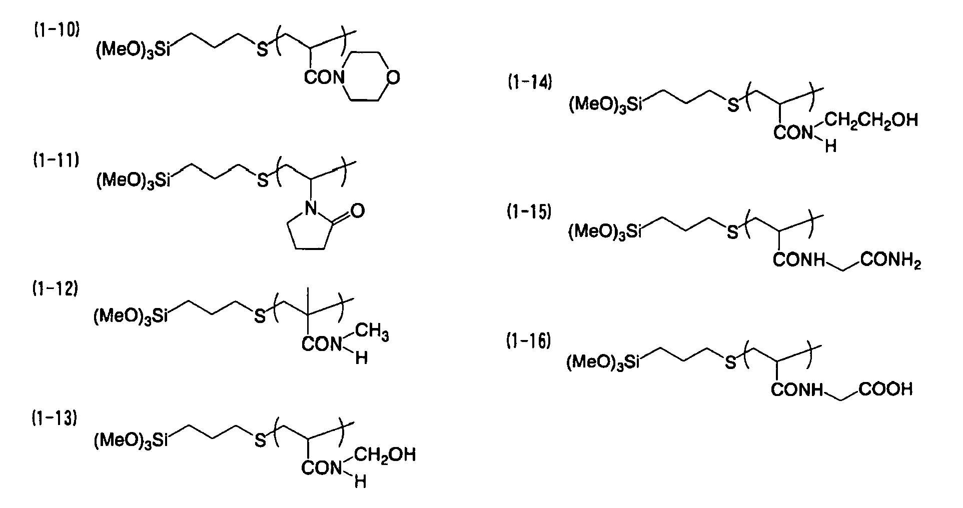

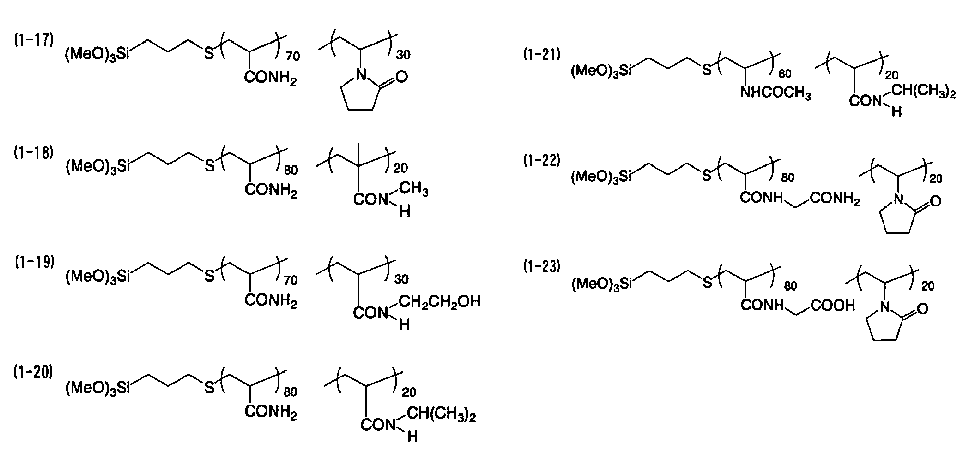

### Method for Synthesizing (C-1) Specific Hydrophilic Polymer

The (C-1) specific hydrophilic polymer, that is used in the invention in combination as needs arise, can be synthesized by radical polymerization of radical-polymerizable monomers represented by the following Structure units (i) or (ii) with a silane coupling agent that is represented by the Structure unit (iii) and has a chain transferability in radical polymerization. Since the silane coupling agent has the chain transferability, a polymer, in which a silane coupling group is introduced at a terminal end of the main chain of the polymer in the radical polymerization, can be synthesized.
The reaction mode for the polymerization is not particularly restricted. A bulk reaction, a solution reaction or a suspension reaction therefor may be carried out in the presence of a radical polymerization initiator or under irradiation of a high-pressure mercury lamp.

When the polymerization reaction is carried out, in order to control an amount of the introduced structure unit represented by Structure unit (iii) and to effectively suppress an independent polymerization of the unit represented by Structure unit (iii) with any one of the structure units represented by Structure units (i) or (ii), the polymerization can be preferably carried out by use of a polymerization method such as a divided addition method or a sequential addition method of an unsaturated compound.
The reaction ratios of the structure units represented by Structure units (i) or (ii) and the structure unit represented by Structure unit (iii) are not particularly restricted. From the viewpoint of suppressing side reactions and improving yield of the hydrolyzable silane compound, it is preferable that a total amount of the structure units represented by Structure units (i) or (ii) is in a range of 0.5 to 50 mole relative to 1 mole of the structure unit represented by Structure unit (iii). It is more preferably in a range of 1 to 45 mole, and most preferably in a range of 5 to 40 mole.

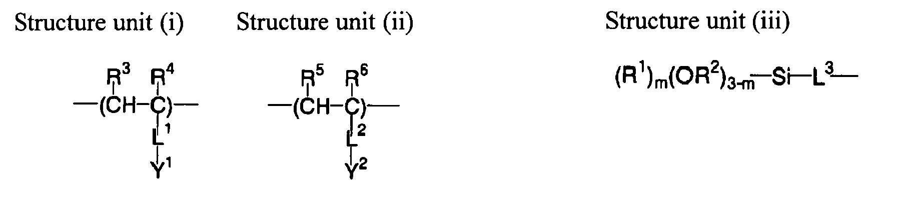

In Structure units (i), (ii) and (iii), R¹ through R⁶, L¹ through L³, Y¹, Y² and m have the same meanings as those in Formula (1). These compounds are commercially available and can be easily synthesized.

Any conventionally-known methods can be used as a radical polymerization method for forming the (C-1) specific hydrophilic polymer. Specific examples thereof include general radical polymerization methods described in *Shin Kobunshi Jikken-gaku 3 (New Polymer Experimentation 3), Kobunshi no Gousei to Hannou 1 (Synthesis and Reaction of Polymers 1),* (edited by Polymer Society Japan, Kyoritsu Shuppan Co., Ltd.), *Shin Jikken Kagaku Kouza 19, Kobunshi Kagaku (I) (Polymer Chemistry (I)),* (edited by The Chemical Society of Japan, Maruzen), *Busshitu Kougaku Kouza, Kobunshi Gousei Kagaku (Synthetic Polymer Chemistry),* (Publishing Division of Tokyo Denki University) and the like.

The (C-1) specific hydrophilic polymer may be a copolymer formed by the above-mentioned respective structure units and additional monomers described below. Examples of such additional monomer include conventinall-known monomers such as acrylic esters, methacrylic esters, acrylamides, methacrylamides, vinyl esters, styrenes, acrylic acid, methacrylic acid, acrylonitrile, maleic anhydride or maleimide. When these monomers are copolymerized, various physicalities such as the film forming property, film strength, hydrophilicity, hydrophobicity, solubility, reactivity or stability can be improved.

Specific examples of the acrylic esters include methyl acrylate, ethyl acrylate, (n- or i-) propyl acrylate, (n-, i-, sec- or t-) butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenythyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate and 2-(hydroxyphenylcarbonyloxy)ethyl acrylate.

Specific examples of the methacrylic esters include methyl methacrylate, ethyl methacrylate, (n- or i-) propyl methacrylate, (n-, i-, sec- or t-) butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate and 2-(hydroxyphenylcarbonyloxy)ethyl methacrylate.

Specific examples of the acrylamides include acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide and N-hydroxyethyl-N-methylacrylamide.

Specific examples of the methacrylamides include methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, N,N-dimethylmethacrylamide, N-methyl-N-phenylmethacrylamide and N-hydroxyethyl-N-methylmethacrylamide.

Specific examples of the vinyl esters include vinyl acetate, vinyl butyrate and vinyl benzoate.
Specific examples of the styrenes include styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene and carboxystyrene.

An amount of the additional monomer used for synthesizing the copolymer is necessarily sufficient to improve the various physicalities of the copolymer. However, when a ratio of the additional monomer in the copolymer is too large, there is fear that the function of hydrophilic film becomes insufficient and the advantage of adding the (C-1) specific hydrophilic polymer may not be sufficiently obtained. Accordingly, a preferable total amount of the other monomers is preferably 80% by weight or less, and more preferably 50% by weight or less relative to a total amount of the (C-1) specific hydrophilic polymer.

The (C) hydrophilic polymers may be used singly or in combinations thereof. Since it is considered that the most preferable aspect of the (C) hydrophilic polymer is the (C-1) specific hydrophilic polymer, all of the (C) hydrophilic polymer used may be the (C-1) specific hydrophilic polymer.
From viewpoints of balancing the film properties and the hydrophilicity, the (C) hydrophilic polymer that is used in combination as needs arises is preferably contained in a range of 0 to 50% by mass and is more preferably contained in a range of 0 to 20% by mass relative to a total amount of the composition used for forming the hydrophilic film of the invention, as a non-volatile component.

### Surfactant

In view of improving a property of a coated surface of the composition for forming the hydrophilic film of the present invention, a surfactant is preferably used. Examples of the surfactant include a nonionic surfactant, an anionic surfactant, a cationic surfactant, an amphoteric surfactant, and a fluorine surfactant. The surfactant(s) can be used alone or in a combination of two or more thereof.

The nonionic surfactant used in the invention is not particularly limited, and may be a conventionally known nonionic surfactant. Examples thereof include polyoxyethylene alkyl ethers, polyoxyethylene alkyl phenyl ethers, polyoxyethylene polystyryl phenyl ethers, polyoxyethylene polyoxypropylene alkyl ethers, glycerin fatty acid partial esters, sorbitan fatty acid partial esters, pentaerythritol fatty acid partial esters, propylene glycol monofatty acid esters, sucrose fatty acid partial esters, polyoxyethylene sorbitan fatty acid partial esters, polyoxyethylene sorbitol fatty acid partial esters, polyethylene glycol fatty acid esters, polyglycerin fatty acid partial esters, polyoxyethylene castor oils, polyoxyethylene glycerin fatty acid partial esters, fatty acid diethanol amides, N,N-bis-2-hydroxyalkyl amines, polyoxyethylene alkyl amine, triethanol amine fatty acid esters, trialkyl amine oxides, polyethylene glycol, and polyethylene glycol-polypropylene glycol copolymers.

The anionic surfactant used in the invention is not particularly limited, and may be a conventionally known anionic surfactant. Examples thereof include fatty acid salts, abietates, hydroxyalkane sulfonates, alkane sulfonates, dialkylsulfosuccinic ester salts, linear alkyl benzene sulfonates, branched alkyl benzene sulfonates, alkyl naphthalene sulfonates, alkyl phenoxy polyoxyethylene propyl sulfonates, polyoxyethylene alkyl sulfophenyl ether salts, N-methyl-N-oleyl taurine sodium salt, N-alkyl sulfosuccinic monoamide disodium salt, petroleum sulfonates, sulfated tallow oil, sulfuric ester salts of alkyl esters of fatty acids, alkyl sulfuric ester salts, polyoxyethylene alkyl ether sulfuric ester salts, fatty acid monoglyceride sulfuric ester salts, polyoxyethylene alkyl phenyl ether sulfuric ester salts, polyoxyethylene styryl phenyl ether sulfuric ester salts, alkyl phosphoric ester salts, polyoxyethylene alkyl ether phosphoric ester salts, polyoxyethylene alkyl phenyl ether phosphoric ester salts, partially saponified styrene-maleic anhydride copolymers, partially saponified olefin-maleic anhydride copolymers and naphthalene sulfonate formalin condensates.

The cationic surfactant used in the invention is not particularly limited, and may be a conventionally known cationic surfactant. Examples thereof include alkyl amine salts, quaternary ammonium salts, polyoxyethylene alkyl amine salts and polyethylene polyamine derivatives.
The amphoteric surfactant used in the invention is not particularly limited, and may be a conventionally known amphoteric surfactant. Examples thereof include carboxy betaines, aminocarboxylic acids, sulfobetaines, aminosulfates and imidazolines.

Examples of the surfactant further includes the surfactants obtained by replacing the polyoxyethylene in the above surfactants by a polyoxyalkylene such as a polyoxymethylene, a polyoxypropylene, or a polyoxybutylene.

Examples of the preferable surfactant further include fluorine surfactants containing perfluoroalkyl groups are. Examples of the fluorine surfactants include: anionic surfactants such as perfluoroalkyl carboxylates, perfluoroalkyl sulfonates and perfluoroalkyl phosphates; amphoteric surfactants such as perfluoroalkyl betaine; cationic surfactants such as perfluoroalkyl trimethyl ammonium salts; and nonionic surfactants such as perfluoroalkyl amine oxides, perfluoroalkyl ethylene oxide adducts, oligomers each having a perfluoroalkyl group and a hydrophilic group, oligomers each having a perfluoroalkyl group and a lipophilic group, oligomers each having a perfluoroalkyl group, a hydrophilic group, and a lipophilic group, and urethanes each having a perfluoroalkyl group and a lipophilic group. Examples of the preferable fluorine surfactants described in JP-A 62-170950, JP-A 62-226143 or JP-A 60-168144 (the disclosures of which are incorporated herein by reference).

An amount of the surfactant to be added to the composition of the invention is preferably in a range of 0.001 to 10% by mass, and more preferably in a range of 0.01 to 5% by mass, based on the whole solid portion of the composition.

### Inorganic particles

The composition for forming the hydrophilic film of the invention can contain inorganic particles so as to improve strength of the film formed by curing the hydrophilic film and hydrophilicity and water-retention thereof.
Preferable examples of the inorganic particles include silica, alumina, magnesium oxide, titanium oxide, magnesium carbonate, calcium alginate and a mixture thereof. These can be used for strengthening of the film and strengthening of interface adhesiveness by surface roughening, even if they do not have photo-thermal converting property.
An average particle diameter of the inorganic particles is preferably in a range of 5 nm to 10 µm, and more preferably in a range of 0.5 µm to 3 µm. When the average particle diameter is in such ranges, the particles stably disperse in the image recording layer, and can provide a non-image portion having superior hydrophilicity, which sufficiently retains film strength of the image recording layer and being difficult to generate printing contamination.
Such inorganic particles can be readily available as a commercial product such as a colloidal silica dispersion. An amount of the inorganic particles to be added to the image recording layer is preferably not more than 20% by mass, and more preferably not more than 10% by mass based on the whole solid portion of the image recording layer.

### Formation of Hydrophilic film

The hydrophilic film of the invention can be formed by dispersing or dissolving the above-described necessary components in a solvent to prepare a coating solution, applying the coating solution to an appropriate substrate to form a coating film, and curing (hardening) the coating film by heat and/or light.
Examples of the solvent used herein include, but is not limited to, ethylenedichloride, cyclohexanone, methyl ethyl ketone, methanol, ethanol, propanol, ethyleneglycol monomethyl ether, 1-methoxy-2-propanol, 2-methoxyethyl acetate, 1-methoxy-2-propylacetate, dimethoxyethane, methyl lactate, ethyl lactate, N,N-dimethylacetamide, N,N-dimethylformamide, tetramethylurea, N-methylpyrrolidone, dimethylsulfoxide, sulforane, γ-butyrolactone and toluene, water.
These solvent are used alone or in combination of two or more thereof as a mixture. The concentration of the solid portion of the coating solution is preferably in a range of 1 to 50% by mass.
In an embodiment, plural coating liquids, each of which including different or overlapping components dissolved or dispersed in a same or different solvents, are prepared, then the coating liquids are applied by the repetition of coating and drying to form the hydrophilic film of the invention.

Although an amount of the hydrophilic film (solid portion) on the substrate after application and drying differs depending on the intended use, a preferred amount thereof is generally in a range of 0.1 to 10.0 g/m², preferably in a range of 0.3 to 7.0 g/m², and more preferably in a range of 0.5 to 5.0 g/m². When the amount of application is in such ranges, a hydrophilic film that has an excellent hydrophilicity and strength can be obtained.
The application can be carried out by various methods. Example thereof include bar coater application, rotation application, spray application, curtain application, dip application, air knife application, blade application and roll application.

When a hydrophilic film coating liquid composition that is a preferable embodiment is prepared, the (B) cross-linking agent (in particular, the specific alkoxide) is preferably contained in the composition in a range of 0.1 to 4 by mass ratio with respect to one parts by mass of the (A) specific hydrophilic compound. There is no particularly restricted upper limit for an amount of added cross-inking component as far as it is in the range that can be sufficiently cross-linked with the hydrophilic polymer. However, when it is extremely exceedingly added, the cross-linking component that does not participate in the cross-linking may result problem in that the prepared hydrophilic surface becomes sticky or the like.

In the case of a specific hydrophilic polymer terminated with a silane coupling group (C-1) is particularly used among the (C) hydrophilic polymers used as desire arises, the (C-1) specific hydrophilic polymer terminated with a silane coupling group, the above-described (A) compound, and a cross-linking component such as the above-described (B) specific alkoxide are dissolved in a solvent followed by thoroughly agitating so that these components hydrolyze and polycondense to form an organic/inorganic composite sol liquid. The sol liquid becomes a hydrophilic film forming coating liquid according to the invention and therewith a surface hydrophilic layer having a high hydrophilicity and film strength can be formed. When the organic/inorganic composite sol liquid is prepared, in order to promote the hydrolytic polycondensation, an acid catalyst or a basic catalyst is preferably used. In order to obtain practically preferable reaction effciency, the catalyst is indispensable.

An acid or a basic compound is used as it is or one dissolved in a solvent such as water or alcohol (hereinafter, referred to as an acidic catalyst and a basic catalyst, respectively) is used as the catalyst. A concentration of the catalyst in the solvent is not particularly restricted, and may be suitably determined depending on the characteristics of the acid or the basic compound used and on the desired content of the catalyst. The catalyst solution of a high concentration tends to promote the hydrolytic polycondensation of the system. However, when the basic catalyst of high concentration is used, in some cases, a precipitate is formed in the sol. Therefore, the concentration of the basic catalyst is preferably 1 N or less in terms of the concentration of the catalyst in an aqueous solution.

The kind of the acid catalyst or the basic catalyst is not particularly restricted. When the catalyst is necessarily used in a high concentration, a catalyst that is constituted of elements that will remain little in a dried film is preferably used.
Specifically, examples of the acid catalyst include hydrogen halides such as hydrochloric acid; nitric acid; sulfuric acid; sulfurous acid; hydrogen sulfide; perchloric acid; hydrogen peroxide; carbonic acid; carboxylic acids such as formic acid or acetic acid; substituted carboxylic acids represented by RCOOH in which R is replaced by any other element or substituent; and sulfonic acids such as benzenesulfonic acid. Examples of the basic catalyst include ammoniacal bases such as aqueous ammonia, and amines such as ethylamine or aniline. Examples of the acid catalyst further include metal compounds such as acetylacetone complexes of titanium, SuCl₄ and Zr(OR) in which R is an alkyl group.

In a preferable embosiment of the invention, a coating liquid for forming the hydrophilic can be prepared by dissolving the (A) specific hydrophilic compound, a cross-linking agent component such as the (B) specific alkoxide and, preferably, the (C-1) hydrophilic polymer terminated with a silane coupling group in a solvent such as ethanol, followed by adding the catalyst as desire arises, further followed by agitating. Preferably, the reaction temperature is in a range of room temperature to 80 °C, and the reaction time during which the mixture is agitated is in a range of 1 to 72 hrs. The hydrolytic polycondensation of the two components are promoted to give an organic/inorganic composite sol by the agitation of the mixture.

The solvents which are used for preparing the composition for forming the hydrophilic film is not particularly limited so long as it can uniformly solve or disperse the constituents of the composition. Examples thereof include water-based solvents such as methanol, ethanol or water.

As mentioned above, the organic/inorganic composite sol (coating liquid composition for forming the hydrophilic film) to form a hydrophilic surface in the invention can be prepared according to a sol-gel method. Details of the sol-gel method is described in, for example, Sumio Sakuhana, *Zoru-Geru Hou no Kagaku (Science for Sol-Gel Process)* (published by Agune Shofusha, 1988); and Ken Hirashima, *Saishin Zoru-Geru Hou ni yoru Kinousei Hakumaku Sakusei Gijyutu (Technology for Functional Thin film Formation by Latest Sol-Gel Process)* (published by General Technology Center, 1992). The methods described in these can be employed in preparing the coating liquid composition for forming the hydrophilic film according to the invention.

As mentioned above, the coating liquid composition for forming the hydrophilic film of the invention may contain various additives in accordance with an object of utilization of the hydrophilic film as far as it does not interfere with the advantages of the invention. For example, as described above in detail, a surfactant may be added thereto to improve a uniformity of the coating liquid.

In the preferable aspect, a film thickness of the hydrophilic surface can be also selected according to the object of utilization of the hydrophilic film. Generally, a dry weight of the layer is in a range of 0.2 to 5.0 g/m², and preferably in a range of 0.5 to 3.0 g/m². When the coating amount is in the above range, excellent hydrophilic effect and excellent film strength can be obtained, and, as is described in detail below, even when an image recording component is added, the hydrophilic film can achieve an excellent recording sensitivity.

### Substrate

The hydrophilic film of the invention can be formed on any substrate. A planographic printing plate material can be obtained by forming the hydrophilic film on an appropriate substrate. Further, a planographic printing plate precursor can be obtained by adding thereto a material that changes from hydrophilic to hydrophobic in response to energy application as described below.
The substrate that can be herein used is not particularly limited so long as it is a plate-shaped material having stable dimension. Examples thereof include paper, paper on which plastic (for example, polyethylene, polypropylene and polystyrene) has been laminated, metal plates (for example, aluminum, zinc and copper), plastic films (for example, cellulose diacetate, cellulose triacetate, cellulose propionate, cellulose butyrate, cellulose acetate butyrate, cellulose nitrate, polyethylene terephtalate, polyethylene, polystyrene, polypropylene, polycarbonate and polyvinylacetal), paper or plastic films on which the above-mentioned metal has been laminated or deposited. Preferable examples thereof include a polyester film and an alminum plate. Among these, an aluminum plate is preferable because of a dimension stability and low price thereof.

A thickness of the substrate used in the invention is preferably in a range of 0.05 mm to 1.0 mm, preferably in a range of 0.07 mm to 0.7 mm, and specifically preferably in a range of 0.1 mm to 0.5 mm.
Before using the aluminum plate, surface treatment such as surface roughening or anodizing is preferably carried out on the surface thereof.

### Curing Method

The hydrophilic film according to the invention can be cured by drying after coating on the substrate. It is also possible to cure the hydrophilic film by light and/or heat after coating and drying. That is, a film formed by coating may be cured under heating and/or irradiation of light. In this case, by heating and/or irradiating light after the coating, the cross-linking reaction is further forwarded and thereby the film strength of the hydrophilic film is improved.
The temperature condition when a composition for forming the hydrophilic film according to the invention is heated and cured to form the hydrophilic film is not particularly restricted, and is preferably in a range of 40 to 300°C. When the cross-linking agent is contained, from viewpoints of the cross-linkability and manufacture stability, the temperature condition is more preferably in a range of 60 to 250°C. In particular, when the (B) specific alkoxide compound is contained in a preferable mode of the invention, the composition for forming the hydrophilic film according to the invention is preferably cured by heat from a viewpoint of suitability to manufacturing processes. The temperature condition when the composition is cured by heat to form the film is not particularly restricted, and is preferably in a range of 60 to 300°C, and, when the cross-linking agent is contained, the temperature condition is more preferably in a range of 80 to 250°C from viewpoints of the cross-linkability and manufacture stability. After coating, the hydrophilic film may be dried and cured as it is under the above temperature condition. Alternatively, after drying the hydrophilic film, it may be heated in a separate process to cure the film.
Furthermore, when the hydrophilic film is cured by light, a light source thereof is not particularly restricted. Any wavelength of UV light, visible light, infrared light and white light may be used.

When the composition for forming the hydrophilic film contains an additional cross-linking agent, the cross-linking structure formed by the additional cross-linking agent may be any of a formation of a covalent bond with heat or light, a formation of a covalent bond with acid and/or radicals generated with heat or light, or a formation of an ion cross-link with acid and base. The curing reaction may be carried out under any of air, nitrogen, or argon atmosphere as far as a lot of radicals can be formed and the curing can be carried out.
In the invention, in order to improve the curability, a conventionally-known promoter of the cross-linking reaction that is suitable for the cross-linking reaction can be used as needs arise. In particular, when a film forming composition is cured through a radical polymerization reaction, a thermal radical generator or photo radical generator such as an azo compound, a peroxy compound, an organic halogen compound, an oxime ester compound, an onium salt compound or a transition metal compound can be used.

### Material that changes from Hydrophilic to Hydrophobic by Heat or Light

When a compound having an image forming function, that is, a compound that can form a hydrophobic region by application of heat or exposure with radioactive rays is contained in the hydrophilic film according to the invention, the hydrophilic film according to the invention becomes a material that can form a hydrophobic region by imparting energy such as heating or irradiation of radiation. When such a compound is used, a hydrophobic region can be formed in a hydrophilic film by exposure so that it can be directly used as a planographic printing plate or the like.
Examples of material that changes from hydrophilic to hydrophobic by heat or light include compounds where the physicality of the compound itself change from t hydrophilic to hydrophobic or materials that form a hydrophobic region owing to fusing (such as polymer particles).
Examples of the compound that changes from hydrophilic to hydrophobic include polymers that have a functional group that changes from hydrophilic to hydrophobic owing to the decarboxylation due to heat described in JP-A No. 2000-122272 (Japanese Patent Application No. 10-229783). Preferable examples thereof include polymer compounds shown below. The polymer is particularly preferable to have the physicality where a contact angle due to a water droplet in air on a film surface when coated is 20° or less before heating and changes to 65° or more after heating. However, the compound that changes from hydrophilic to hydrophobic is not restricted thereto.

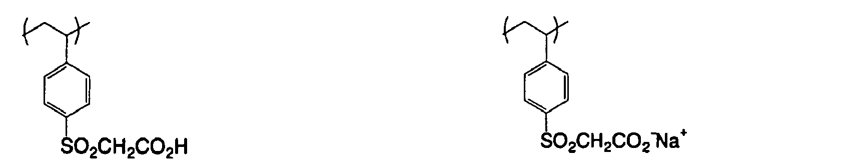

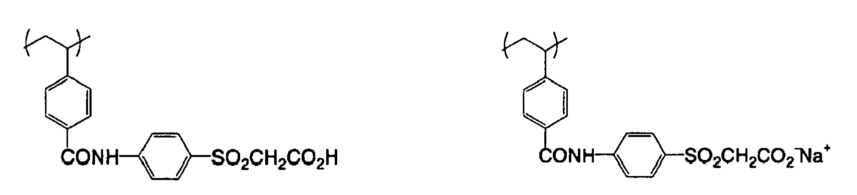

The polymer particles that can be preferably used in the invention are particles that convert a hydrophilic image recording layer to hydrophobic. The polymer particles are preferably selected from thermoplastic polymer particles, heat reactive polymer particles, and microcapsules containing a hydrophobic compound.

Preferable examples of the thermoplastic polymer particles used for the invention include thermoplastic polymer particles disclosed in Research Disclosure No.33303 issued in January 1992, JP-A Nos. 9-123387, 9-131850, 9-171249 and 9-171250 and EP No. 931647. Specific examples of the polymer which constitutes such thermoplastic polymer particles include homopolymers or copolymers of ethylene, styrene, vinyl chloride, methyl acrylate, ethyl acrylate, methyl methacrylate, ethyl methacrylate, vinylidene chloride, acrylonitrile, vinylcarbazole or the like, or mixtures thereof. Among these, more preferable examples thereof can include polystyrene and polymethyl methacrylate.

An average particle diameter of the thermoplastic polymer particles used in the invention is preferably in a range of 0.01 to 2.0 µm. Examples of a synthesis method of such thermoplastic polymer particles include an emulsification polymerization method, a suspension polymerization method, and a solution dispersion method, that is a method including dissolving these compounds in a water-insoluble organic solvent, mixing the solution with an aqueous solution containing a dispersing agent, and emulsifying the mixture, and further heating the solution to evaporate the organic solvent so as to solidify the resultant to a form of particle.

Examples of the heat reactive polymer particles used in the invention include a heat-curable polymer particle and a polymer particle having heat reactive group.

Examples of the heat-curable polymer include resins having phenol skeleton, urea resins (for example, a resin obtained by resin-formation of a urea derivative such as urea or methoxymethylated urea with an aldehyde such as formaldehyde), melamine resins (for example, a resin obtained by resin-formation of melamine or a derivative thereof with an aldehyde such as formaldehyde), alkyd resins, unsaturated polyester resins, polyurethane resins, and epoxy resins. Among these, resins having phenol skeleton, melamine resins, urea resins and epoxy resins are specifically preferred.

Examples of the preferred resins having phenol skeleton include phenol resins formed by resin-formation of phenol or cresol with an aldehyde such as formaldehyde, hydroxystyrene resin, and polymers or copolymers of methacrylamide or acrylamide or methacrylate or acrylate each having phenol skeleton, such as N-(p-hydroxyphenyl)methacrylamide or p-hydroxyphenylmethacrylate.

An average particle diameter of the heat-curable polymer particles used for the invention is preferably in a range of 0.01 to 2.0 µm. Such heat-curable polymer particles can be readily available by a solution dispersion method, or alternatively, can be obtained by forming the heat-curable polymer to a particle form during a synthesis thereof. However, the invention is not limited to these methods.

The heat reactive group used for the polymer particles having heat reactive group used for the invention may be any reactive functional group so long as it forms a chemical bond. Preferred examples thereof include an ethylenically unsaturated group for radical polymerization reaction (for example, acryloyl group, methacryloyl group, vinyl group and allyl group); a cationic polymerizable group (for example, vinyl group, and vinyloxy group); isocyanate group or a block form thereof, epoxy group and vinyloxy group for addition reaction, and functional group having active hydrogen atom, which is a reaction partner therefor (for example, amino group, hydroxyl group and carboxyl group); carboxyl group for condensation reaction, and hydroxyl group or amino group, which is a reaction partner therefor; acid anhydride for ring-opening addition reaction, and amino group or hydroxyl group, which is a reaction partner therefor.

These functional groups can be introduced in the polymer particles during polymerization, or can be introduced by using a reaction of polymers after polymerization.

When these functional group is introduced during polymerization, emulsification polymerization or suspension polymerization is preferably used for polymerizing the monomer having heat reactive group. Specific examples of the monomers having heat reactive group include, but are not limited to, allyl methacrylate, allyl acrylate, vinyl methacrylate, vinyl acrylate, 2-(vinyloxy)ethyl methacrylate, p-vinyloxystyrene, p-{2-(vinyloxy)ethyl}styrene, glycidyl methacrylate, glycidyl acrylate, block isocyanate of 2-isocyanateethyl methacrylate or an alcohol thereof or the like, block isocyanate of 2-isocyanateethyl acrylate or an alcohol thereof or the like, 2-aminoethyl methacrylate, 2-aminoethyl acrylate, 2-hydroxyethyl methacrylate, 2-hydroxyethyl acrylate, acrylic acid, methacrylic acid, maleic anhydride, difunctional acrylate and difunctional methacrylate.

Alternatively, a copolymer formed from the above monomer and a monomer, which has no heat reactive group and which can be polymerized with the monomer, can be used in the invention. Examples of the copolymerizable monomer having no heat reactive group can include styrene, alkylacrylate, alkylmethacrylate, acrylonitrile, vinyl acetate and like, but is not limited to these so long as it has no heat reactive group.

Examples of the reaction of polymers used for the introduction of the heat reactive group after the polymerization includes the reaction of polymers disclosed in WO96-34316.

Among the polymer particles having heat reactive group, polymer particles which can be easily coalesced by heat are preferable. Specifically, polymer particles, the surfaces of which are hydrophilic and which are capable of being dispersed in water, are particularly preferable. Furthermore, the contact angle of the film (water droplets in air) prepared by applying only the polymer particles having heat reactive group and drying at a temperature being lower than the solidification temperature is preferably lower than the contact angle (water droplets in air) of the film prepared by drying at a temperature which is higher than the solidification temperature. The surface of the polymer particles can be made hydrophilic by adsorbing a hydrophilic polymer such as polyvinylalcohol or polyethyleneglycol, an oligomer, or a hydrophilic low molecular compound to the surface of the polymer particles. However, the method for hydrophilizing the surface of the particles is not limited to this method.

A curing temperature of these heat-curable polymer particles is preferably not less than 70°C, and more preferably not less than 100°C in view of stability over time. An average particle diameter of the polymer particles is preferably in a range of 0.01 to 2.0 µm, more preferably in a range of 0.05 to 2.0 µm, and still more preferably in a range of 0.1 to 1.0 µm. Good resolution and stability for a long time can be obtained when the average particle diameter of the polymer particles is in such ranges.

The microcapsule used in the invention encloses a hydrophobic compound. The hydrophobic compound is preferably a compound having a heat reactive group. Preferable examples of the heat reactive group include heat reactive groups which are similar to those used in the above-described polymer particle having the heat reactive group. Hereinafter, details regarding the compound having the heat reactive group are provided.

Preferable examples of the compound having the radical polymerizable unsaturated bond include compounds having at least one, preferably two or more of ethylenically unsaturated bond such as, for example, acryloyl group, methacryloyl group, vinyl group, allyl group, or styryl group. Such compounds are widely known in the art as a monomer or a cross-linking agent for a radical polymerizable compound, and these compounds can be used without specific limitation for the invention. Examples of the chemical form thereof include monomer, prepolymer (namely, dimer, trimer, and oligomer), polymer, copolymer, and a mixture thereof.

Specific examples of the radical polymerizable compound preferable for the invention includes compounds having polymerizable unsaturated group disclosed in JP-A No. 2001-277740. Typical examples thereof include, but are not limited to, trimethylolpropane di(meth)acrylate, trimethylolpropane tri(meth)acrylate, pentaerithritol di(meth)acrylate, pentaerithritol tri(meth)acrylate, pentaerithritol tetra(meth)acrylate, dipentaerithritol di(meth)acrylate, dipentaerithritol penta(meth)acrylate, dipentaerithritol hexa(meth)acrylate and an adduct of trimethylolpropane diacrylate and xylylenediisocyanate.

Examples of the radical polymerizable compound which have a form of a polymer or copolymer and has ethylenically unsaturated group includes a copolymer of allyl methacrylate. Examples thereof include, but not limited to, allyl methacrylate/methacrylic acid copolymer, allyl methacrylate/ethylmethacrylate copolymer and allyl methacrylate/butylmethacrylate copolymer.
Examples of the radical polymerizable compound further include styryl compounds. Examples thereof include the compounds disclosed in JP-A No. 2005-231255.

Examples of the compound having a vinyloxy group preferred for the invention include compounds disclosed in JP-A No. 2002-29162. Specific examples thereof include, but not limited to, tetramethyleneglycol divinylether, trimethylolpropane trivinylether, tetraethyleneglycol divinyl ether, pentaerithritol divinyl ether, pentaerithritol trivinyl ether, pentaerithritol tetravinyl ether, 1,4-bis{2-(vinyloxy)ethyloxy}benzene, 1,2-bis{2-(vinyloxy)ethyloxy}benzene, 1,3-bis{2-(vinyloxy)ethyloxy}benzene, 1,3,5-tris{2-(vinyloxy)ethyloxy}benzene, 4,4'-bis{2-(vinyloxy)ethyloxy}biphenyl, 4,4'-bis{2-(vinyloxy)ethyloxy}diphenylether, 4,4'-bis{2-(vinyloxy)ethyloxy}diphenylmethane, 1,4-bis{2-(vinyloxy)ethyloxy}naphthalene, 2,5-bis{2-(vinyloxy)ethyloxy}furan, 2,5-bis{2-(vinyloxy)ethyloxy}thiophene, 2,5-bis{2-(vinyloxy)ethyloxy}imidazole, 2,2-bis[4-{2-(vinyloxy)ethyloxy}phenyl]propane, bis(vinyloxyethyl)ether of bisphenol A, 2,2-bis{4-(vinyloxymethyloxy)phenyl}propane and 2,2-bis{4-(vinyloxy)phenyl}propane.

The compound having epoxy group that is preferable for the invention preferably is a compound having two or more of epoxy groups, and examples thereof includes a glycidylether compound obtained by the reaction of a polyhydric alcohol or a polyhydric phenol with epichlorohydrin or a prepolymer thereof, and a polymer or a copolymer of glycidyl acrylate or glycidyl methacrylate.

Specific examples thereof include propyleneglycol diglycidylether, tripropyleneglycol diglycidylether, polypropyleneglycol diglycidylether, neopentylglycol diglycidylether, trimethylolpropane triglycidylether, diglycidylether of hydrogenated bisphenol A, hydroquinone diglycidylether, resorcinol diglycidylether, diglycidylether or epichlorohydrin polyadduct of bisphenol A, diglycidylether or epichlorohydrin polyadduct of bisphenol F, diglycidylether or epichlorohydrin polyadduct of halogenated bisphenol A, diglycidylether or epichlorohydrin polyadduct of biphenyl-form bisphenol and glycidyletherated product of novolak resin, methyl methacrylate/glycidyl methacrylate copolymer, ethyl methacrylate/glycidyl methacrylate copolymer, and the like.

Examples of commercial products of the above-mentioned compounds include EPICOAT 1001 (molecular weight about 900, epoxy equivalent 450 to 500), EPICOAT 1002 (molecular weight about 1600, epoxy equivalent 600 to 700), EPICOAT 1004 (about 1060, epoxy equivalent 875 to 975), EPICOAT 1007 (molecular weight about 2900, epoxy equivalent 2000), EPICOAT 1009 (molecular weight about 3750, epoxy equivalent 3000), EPICOAT 1010 (molecular weight about 5500, epoxy equivalent 4000), EPICOAT 1100L (epoxy equivalent 4000) and EPICOAT YX31575 (epoxy equivalent 1200) (all trade names, manufactured by Japan Epoxy Resin Co., Ltd.), and SUMIEPOXY ESCN-195XHN, ESCN-195XL and ESCN-195XF (all trade names, manufactured by Sumitomo Chemical Co. Ltd.

Examples of the isocyanate compound that is preferable for the invention include tolylenediisocyanate, diphenylmethanediisocyanate, polymethylenepolyphenylpolyisocyanate, xylylenediisocyanate, naphthalenediisocyanate, cyclohexanephenylenediisocyanate, isophoronediisocyanate, hexamethylenediisocyanate, cyclohexyldiisocyanate, and compounds obtained by blocking these with alcohol or amine.

Examples of the amine compound that is preferable for the invention include ethylenediamine, diethylenetriamine, triethylenetetramine, hexamethylenediamine, propylenediamine and polyethyleneimine.

Examples of the compound having hydroxyl group that is preferable for the invention can include compounds having a terminal methylol group, polyhydric alcohols such as pentaerithritol and bisphenol-polyphenols.

Examples of the compound having carboxyl group that is preferable for the invention include aromatic polyhydric carboxylic acids such as pyromellitic acid, trimellitic acid or phthalic acid, and aliphatic polyhydric carboxylic acids such as adipic acid.

Examples of the acid anhydride that is preferable for the invention include pyromellitic anhydride and benzophenonetetracarboxylic anhydride.

Conventionally-known methods can be applied for microcapsulating the above compound having heat reactive group. Examples of the method for producing microcapsules include methods utilizing coacelvation as disclosed in U.S. Patent Nos. 2,800,457 and 2,800,458; methods by interface polymerization as disclosed in U.K. Patent No. 990443 and U.S. Patent No. 3,287,154, Japanese Patent Application Publication (JP-B) Nos. 38-19574, 42-446 and 42-711; methods by precipitation of a polymer as disclosed in U.S. Patent Nos. 3,418,250 and 3,660,304; a method using an isocyanatepolyol wall material as disclosed in U.S. Patent No. 3,796,669; a method using an isocyanate wall material as disclosed in U.S. Patent No. 3,914,511; methods using a urea-formaldehyde or urea formaldehyde-resorcinol wall forming material as disclosed in U.S. Patent Nos. 4,001,140, 4,087,376, and 4,089,802; methods using wall materials such as melamine-formaldehyde resin or hydroxycellulose as disclosed in U.S. Patent No. 4,025,445; in situ methods by polymerization of a monomer as disclosed in JP-B Nos. 36-9163 and 51-9079; spray drying methods as disclosed in U.K. Patent No. 930422 and U.S. Patent No. 3,111,407; electrolyze dispersion cooling method as disclosed in U.K. Patent Nos. 952807 and 967074.
A water-soluble polymer can be used as a dispersing agent for stably dispersing microcapsules in an aqueous medium. Examples of the water-soluble polymer include polyvinyl alcohol and denatured ones thereof, polyacrylic amide and derivatives thereof, ethylene/vinyl acetate copolymers, styrene/maleic anhydride copolymers, ethylene/maleic anhydride copolymers, isobutylene/maleic anhydride copolymers, polyvinyl pyrrolidone, ethylene/acrylic acid copolymers, vinyl acetate/acrylic acid copolymers, carboxylmethyl cellulose, methyl cellulose, casein, gelatin, starch derivatives, gum arabic, and sodium alginate. The water-soluble polymers are preferably ones that do not react with an isocyanate compound or are ones that extremely hardly react therewith. One that has a reactive amino group in a molecular chain such as gelatin is preferably deprived of the reactivity in advance.

Preferable wall material of the microcapsules used for the invention is a material that has three dimensional cross-linking and a property to swell in a coating solvent. In view of this, preferable examples of the wall material for the microcapsules include polyurea, polyurethane, polyester, polycarbonate, polyamide, and a mixture thereof, and specifically preferable examples thereof include polyurea and polyurethane. A compound having a heat reactive group can also be introduced in the microcapsule wall.

Furthermore, from a viewpoint of improving the stain resistance, the present invention preferably include the microcapsule particles that can obtained by a process including: dissolving a polyfunctional isocyanate compound that has at least two isocyanate groups in a solvent immiscible with water; emulsifying and dispersing a resultant solution to an aqueous solution containing a hydrophilic polymer having at one end at least one active hydrogen group that can react with the isocyanate group; and removing the solvent from oil droplets in the dispersion as described in a specification of Japanese Patent Application No. 2004-222932 previously submitted by the applicant of the present invention. The microcapsule particles obtained by removing a solvent from the oil droplets caused by emulsifying and dispersing the hydrophilic polymer having at one end at least one active hydrogen group in an aqueous solution containing can include the foregoing reactive compound.

An average particle diameter of the obtained microcapsules is preferably in a range of 0.01 to 3.0 µm, more preferably in a range of 0.05 to 2.0 µm, and specifically preferably in a range of 0.10 to 1.0 µm. When average particle diameter is in such range, good resolution and stability over time can be obtained.

The microcapsules may be coalesced with each other by heat or may not be coalesced. The only necessary thing is that the content of microcapsule that is eluted on the surface or components that penetrate to the microcapsules from outside thereof cause a chemical reaction by heat. The eluted content or the components penetrate to the microcapsules may react with an added hydrophilic resin or an added low molecular compound. Further, two or more kinds of microcapsules may be reacted with each other by providing different functional groups which react with each other by heat. As are described above melt coalescence of the microcapsules by heat is preferable for image formation, but is not essential.

Amounts of the polymer particles and the microcapsules to be added to the image recording layer are both preferably not less than 50% by mass, and more preferably in a range of 70 to 98% by mass, based on the whole solid content in the image recording layer. When the amounts are in such ranges, good image can be formed and good printing durability can be obtained.

A solvent that can dissolve contents in the microcapsules and can swell the wall material can be added to a dispersing medium of the microcapsules when the microcapsules are contained in the image recording layer in the invention. By adding such solvent, diffusion of compounds contained in the microcapsules to outer side of the microcapsules can be enhanced. Such solvent can be readily selected from many commercially available solvents depending on microcapsule dispersants, materials used in the microcapsule wall, wall thicknesses and contents of the microcapsules. Preferable examples of the solvent for water-dispersible microcapsules consisting of a cross-linking polyurea, a polyurethane wall or the like include alcohols, ethers, acetals, esters, ketones, polyhydric alcohols, amides, amines and aliphatic acids.

Specific examples of compounds for the solvent include, but are not limited to, methanol, ethanol, tert-butanol, n-propanol, tetrahydrofuran, methyl lactate, ethyl lactate, methylethylketone, propyleneglycol monomethylether, ethyleneglycol diethylether, ethyleneglycol monomethylether, γ-butyrolactone, N,N-dimethylformamide and N,N-dimethylacetoamide. Alternatively, two or more of these solvents can be used in combination. A solvent, that does not be dissolved in the microcapsule dispersant solely but is dissolved by mixing the above solvent, can be also used.

An amount of such solvent to be added is determined by a combination of materials, and generally is in a range of 5 to 95% by mass of the image recording layer coating solution is effective, preferably in a range of 10 to 90% by mass, and more preferable range is 15 to 85% by mass of the image recording layer coating solution.

### Infrared absorbing agent

When the hydrophilic film of the invention is used as a planographic printing material, in order to conduct the formation of the hydrophobic region by the material that changes from hydrophilic to hydrophobic with a highsensitivity, the hydrophilic film of the invention preferably contain an infrared absorbing agent. namely, it is usually needed to use an infrared absorbing agent when a planographic printing plate is prepared by image-forming a planographic printing material by using a laser emitting infrared rays of 760 to 1,200 nm as a light source. An infrared absorbing agent has a function of converting absorbed infrared rays into heat. Thermal degradation of a compound that can forms a hydrophobic region, thermal fusion or phase change of the polymer particles are caused by thus generated heat, and a hydrophobic region can be thereby formed. The infrared absorbing agent used in the invention is not particularly restricted as far as it can absorb light having a wavelength in a range of 760 to 1200 nm, and various kinds of known pigments, dyestuffs or dyes, and metal particles can be used.

The dye may be selected from commercially available dyes and known dyes described in e.g. "Senryo Binran" (Dye Handbook) (published in 1970 and compiled by Society of Synthetic Organic Chemistry, Japan). Examples of such dyes include azo dyes, metal complex salt azo dyes, pyrazolone azo dyes, naphthoquinone dyes, anthraquinone dyes, phthalocyanine dyes, carbonium dyes, quinone imine dyes, methine dyes, cyanine dyes, squarylium dyes, pyrylium salts and metal thiolate complexes.
Preferable examples of the dyes include cyanine dyes described in JP-A 58-125246, JP-A 59-84356, JP-A 60-78787 etc., methine dyes described in JP-A 58-173696, JP-A 58-181690, JP-A 58-194595 etc., naphthoquinone dyes described in JP-A 58-112793, JP-A 58-224793, JP-A 59-48187, JP-A 59-73996, JP-A 60-52940, JP-A 60-63744 etc., squarylium dyes described in JP-A 58-112792 etc., and cyanine dyes described in UK Patent No. 434,875.

Near infrared ray absorbing sensitizers described in US Patent No. 5,156,938 are also preferable. Also preferably used are substituted aryl benzo(thio) pyrylium salts described in US Patent No. 3,881,924, trimethine thiapyrylium salts described in JP-A 57-142645 (US Patent No. 4,327,169), pyrylium compounds described in JP-A 58-181051, JP-A 58-220143, JP-A 59-41363, JP-A 59-84248, JP-A 59-84249, JP-A 59-146063, and JP-A 59-146061, cyanine dye described in JP-A 59-216146, pentamethine thiopyrylium salts described in US Patent No. 4,283,475, and pyrylium compounds described in JP-B 5-13514 and JP-B 5-19702. Other preferable examples of the dyes include the near infrared ray absorbing dyes of formulae (I) and (II) described in US Patent No. 4,756,993.
Other preferable examples of the infrared absorbing dye in the invention include specific indolenine cyanine dyes described in Japanese Patent Application No. 2001-6326 or JP-A No. 2002-278057, as shown below.

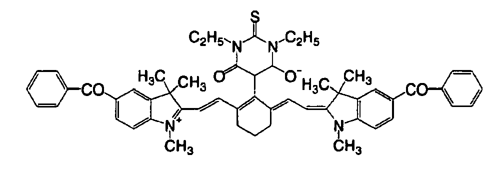

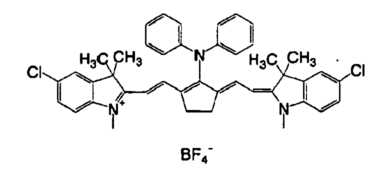

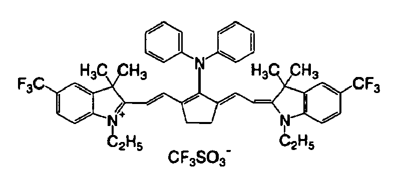

Particularly preferable among these dyes are cyanine dyes, squarylium dyes, pyrylium salts, nickel-thiolate complexes and indolenine cyanine dyes. Cyanine dyes and indolenine cyanine dyes are more preferable, and cyanine dyes represented by the following Formula (i) is still more preferable.

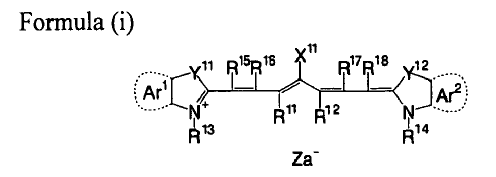

In Formula (i), X¹¹ represents a hydrogen atom, halogen atom, -NPh₂, X¹²―L¹¹ or the group shown below.

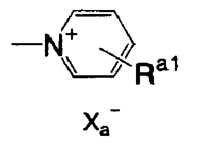

X¹² represents an oxygen atom, a nitrogen atom, or a sulfur atom. L¹¹ represents a hydrocarbon group having 1 to 12 carbon atoms, an aromatic ring containing a heteroatom, or a hydrocarbon group containing a heteroatom and having 1 to 12 carbon atoms. The heteroatom refers to N, S, O, a halogen atom or Se. Xa⁻ represents is defined similarly to Za⁻ explained below. R^{a1} represents a substituent selected from a hydrogen atom, an alkyl group, an aryl group, a substituted or unsubstituted amino group, and a halogen atom.

R¹¹ and R¹² each independently represent a hydrocarbon group having 1 to 12 carbon atoms. From the viewpoint of the storage stability of the recording layer coating liquid, each of R¹¹ and R¹² is preferably a hydrocarbon group having 2 or more carbon atoms. In a preferable embodiment, R¹¹ and R¹² are bound to each other to form a 5- or 6-memberred ring.

Ar¹ and Ar² may be the same as or different from each other, and each independently represent an aromatic hydrocarbon group which may have a substituent. Preferable examples of the aromatic hydrocarbon group include a benzene ring and a naphthalene ring. Preferable examples of the substituent include a hydrocarbon group having 12 or less carbon atoms, a halogen atom or an alkoxy group having 12 or less carbon atoms. Y¹¹ and Y¹² may be the same as or different from each other, and each independently represent a sulfur atom or a dialkyl methylene group having 12 or less carbon atoms. R¹³ and R¹⁴ may be the same as or different from each other, and each independently represent a hydrocarbon group having 20 or less carbon atoms, which may have a substituent. Preferable examples of the substituent include preferably an alkoxy group containing 12 or less carbon atoms, a carboxyl group or a sulfo group. R¹⁵, R¹⁶, R¹⁷ and R¹⁸ may be the same as or different from each other, and each independently represent a hydrogen atom or a hydrocarbon group having 12 or less carbon atoms. Each of R¹⁵, R¹⁶, R¹⁷ and R¹⁸ is preferably a hydrogen atom because the starting material is easily available. Za⁻ represents a counter anion. However, when the cyanine dye represented by Formula (a) has an anionic substituent in its structure and thus neutralization of the charge is not necessary, Za⁻ can be omitted. From the viewpoint of the storage stability of the recording layer coating liquid, preferable examples of Za⁻ include a halogen ion, a perchlorate ion, a tetrafluoroborate ion, a hexafluorophosphate ion and a sulfonate ion, and particularly preferable examples thereof include a perchlorate ion, a hexafluorophosphate ion and an aryl sulfonate ion.

Specific examples of the cyanine dye which is represented by Formula (i) and is preferably used in the invention include the cyanine dyes described in columns [0017] to [0019] of JP-A 2001-133969.
Other preferable examples of the infrared absorbing agent in the invention include specific indolenine cyanine dyes described in JP-A No. 2002-278057.

Examples of the pigment which can be used in the invention include commercially available pigments and the pigments described in Color Index (C. 1.) Handbook, "Saishin Ganryo Binran" (Newest Dye Handbook) (published in 1977 and compiled by Japanese Society of Pigment Technology), "Saishin Ganryho Oyo Gijyutsu" (Newest Pigment Applied Technology) (published in 1986 by CMC), and "Insatsu Inki Gijyutsu" (Printing Ink Technology) (published in 1984 by CMC). The disclosures of these books are incorporated herein by reference.

Examples of kinds of the pigment include black pigments, yellow pigments, orange pigments, brown pigments, red pigments, purple pigments, blue pigments, green pigments, fluorescent pigments, metal powder pigments, and polymer-bound dyes. Specific examples of the pigment include insoluble azo pigments, azo lake pigments, condensed azo pigments, chelate azo pigment, phthalocyanine pigments, anthraquinone pigments, perylene and perynone pigments, thioindigo pigments, quinacridone pigments, dioxazine pigments, isoindolinone pigments, quinophthalone pigments, dye lake pigments, azine pigments, nitroso pigments, nitro pigments, natural pigments, fluorescent pigments, inorganic pigments and carbon black. Among these, carbon black is preferable.

The pigments may be or may not be subjected to surface treatment before use. Examples of the method of surface treatment include a method of coating the pigment surface with resin or wax, a method of allowing a surfactant to adhere to the pigment surface, and a method of binding a reactive material (e.g., a silane coupling agent, an epoxy compound, a polyisocyanate etc.) onto the pigment surface. These surface treatment methods are described in "Kinzoku Sekken No Seishitsu To Oyo" (Properties and Application of Metallic Soap) (Sachi Shobo), "Insatsu Inki Gijyutsu" (Printing Ink Technology) (published in 1984 by CMC Shuppan) and "Saishin Ganryho Oyo Gijyutsu" (Newest Pigment Applied Technology) (published in 1986 by CMC Shuppan). The disclosures of these books are incorporated herein by reference.

The particle diameter of the pigment is preferably in a range of 0.01 to 10 µm, more preferably in a range of 0.05 to 1 µm, still more preferably in a range of 0.1 to 1 µm. In such ranges, the excellent dispersion stability of the pigment in the image recording layer coating liquid and the excellent uniformity of the image recording layer can be achieved.

Examples of the method of dispersing the pigment include known dispersion techniques used in production of inks or toners. Examples of the dispersing machine include a supersonic dispersing device, sand mill, attritor, pearl mill, super mill, ball mill, impeller, disperser, KD mill, colloid mill, dynatron, triple roll mill, and press kneader. Details of the dispersing are described in "Saishin Ganryho Oyo Gijyutsu" (Newest Pigment Applied Technology) (published in 1986 by CMC Shuppan).

The metal particles used in the invention are particles of oxides of transition metals, sulfides of metal elements of 2 through 12 groups of a periodic table and nitrides of metals of 3 through 12 groups of a periodic table, or simple metals or alloys of metals of 2 through 12 groups of the periodic table.
Examples of the transition metal oxide include oxides of iron, cobalt, chromium, manganese, nickel, molybdenum, tellurium, niobium, yttrium, zirconium, bismuth, ruthenium and vanadium. Further, oxides of zinc, mercury, cadmium, silver and copper, which are not necessarily included in the transition metal in some classification methods, can be used in the invention. Among these, FeO, Fe₂O₃ Fe₃O₄, CoO, Cr₂O₃, MnO₂, ZrO₂, Bi₂O₃, CuO, CuO₂, AgO, PbO, PbO₂ and VOₓ (x is in a range of 1 to 5) are included in examples of particularly preferable metal oxides. Examples of VOₓ include black VO, V₂O₃ and VO₂, and brown V₂O₅.

Examples of preferable inorganic metal oxide further include TiOₓ (x is in a range of 1.0 to 2.0), SiOₓ (x is an integer of 0.6 to 2.0) and AlOₓ (x is in a range of 1.0 to 2.0). Examples of TiOₓ (x is in a range of 1.0 to 2.0) include black TiO, blackish purple Ti₂O₃, and TiO₂ group that shows various colors depending on crystalline forms and inclusions thereof. Examples of SiOₓ (x is in a range of 0.6 to 2.0) include SiO, Si₃O₂, and SiO₂ that is colorless or exhibits colors such as purple, blue or red depending on coexisting materials. Examples of AlOₓ (in which x is 1.5) include corundum that is colorless or exhibits colors such as red, blue or green depending on coexisting materials.

When the metal oxide is a lower oxide of a polyvalent metal, it can have in some cases both characteristics of a photo-thermal converting agent and a self-exothermic air-oxidation material. Such metal oxide can be preferably used since it can utilize thermal energy generated as a result of the self-exothermic reaction as well as energy obtained by photo-absorbed light. Examples of the lower oxide of the polyvalent metals include lower oxides of Fe, Co and Ni. Specific examples thereof include ferrous oxide, triiron tetroxide, titanium monoxide, stannous oxide and chromous oxide. Among these, ferrous oxide, triiron tetroxide and titanium monoxide are preferable.

Whether the metal oxide causes a self-exothermic reaction or not can be easily confirmed with a differential thermal balance (TG/DTA). When a self-exothermic reaction material is inserted in the differential thermal balance, and a temperature thereof is elevated at a constant speed, an exothermic peak appears at a certain temperature and thereby an exothermic reaction is observed. When an oxidation reaction of a metal or a lower metal oxide is used as the self-exothermic reaction, in addition to the appearance of the exothermic peak, an increase in weight is similarly observed by using a thermal balance.
As described above, the utilization of the self-exothermic reaction energy in addition to the photo-thermal conversion mechanism enables utilization of thermal energy that is more than ever obtained per unit amount of radiation continuously. The sensitivity can be improved thereby.

In a case when the metal oxide is photo-thermal converting fine particles made of a metal sulfide, the metal sulfide is preferably a sulfide of a heavy metal such as a transition metal. Preferable examples of sulfide among these include sulfides of iron, cobalt, chromium, manganese, nickel, molybdenum, tellurium, strontium, tin, copper, silver, lead and cadmium. In particular, silver sulfide, ferrous sulfide and cobalt sulfide are preferable.

In a case when the metal oxide is photo-thermal converting fine particles made of a metal nitride, the metal nitride is preferably azide compounds of metals. In particular, azide compounds of copper, silver and tin are preferable. The azide compounds further have the characterietics of self-exothermic compounds that generate heat as a result of the photodecomposition. Examples of preferable inorganic metal nitride further include TiNₓ (x is in a range of 1.0 to 2.0), SiNₓ (x is in a range of 1.0 to 2.0) and AlNₓ (x is in a range of 1.0 to 2.0). Examples of TiNₓ (x is in a range of 1.0 to 2.0) include bronze TiN and brown TiNₓ (x is 1.3). Examples of SiNₓ (x is in a range of 1.0 to 2.0) include Si₂N₃, SiN and Si₃N₄. Furthermore, examples of AlNₓ (x is in a range of 1.0 to 2.0) include AIN.

The above-mentioned oxides, sulfides and nitrides of metals can be obtained according to conventionally-known manufacturing methods. Further, there are many that are commarcially available under names such as titanium black, iron black, molybdenum red, emerald green, cadmium red, cobalt blue, iron blue or ultramarine.

An optimum particle size of these hydrophilic metal compound is different depending on a refractive index and an absorption constant of a material that constitutes the particle. It is generally in a range of 0.005 to 5 µm, and preferably in a range of 0.01 to 3 µm. Inefficient light absorption occurs due to the light scattering in a case when the particle size is excessively small, and it also occurs due to the reflection at particle interfaces in a case when the particle size is too coarse.

Many of the metal particles have both characteristics of the photo-thermal converting property and he self-exothermic property. Such metal particles supply a further larger amount of heat by the exothermic reaction triggered by the heat in addition to generation of heat caused by the light absorption.

Examples of the metallic particle include microparticles of Mg, Al, Si, Ti, V, Cr, Mn, Fe, Co, Ni, Cu, Zn, Ga, Ge, Y, Zr, Nb, Mo, Tc, Ru, Pd, Ag, Cd, In, Sn, Sb, Hf, Ta, W, Re, Os, Ir, Pt, Au, or Pb.

Further, the metals for the metal particles may be constituted of not only simple metal but also an alloy made of two components or more, and furthermore the metals for the metal particles may be constituted of metals and any of the above-described oxides, nitrides, sulfides and carbides of metals. Simple metals have larger the self-exothermic reaction heat energy; however, handling thereof is troublesome in air, and some of these are accompanied with fear of self-ignite upon coming into contact with air. It is preferable that surfaces of metal powders formed such simple metals are covered with a layer formed of an oxide, nitride, sulfide or carbide of metals in a layer thickness of several nanometers. A particle diameter of the particles is 10 µm or less, preferably in a range of 0.005 to 5 µm, and more preferably in a range of 0.01 to 3 µm. In a case when it is smaller than 0.01 µm, the particles can be dispersed with difficulty, and when it is larger than 10 µm, the resolving power of a printed matter is deteriorated.

The infrared absorbing agent may be added inside of particles such as microcapsules together with other components, in a hydrophilic film, or in a separately disposed layer. The infrared absorbing agent is added so that an absorbance of the image recording layer at the maximum absorption wavelength in a wavelength range of 760 to 1200 nm falls in a range of 0.3 to 1.2 by means of a reflection measurement method when a hydrophilic film is formed as an image recording layer. It is preferable that the absorbance falls in a range of 0.4 to 1.1. In a case when the absorbance falls in the range, a hydrophobic region is efficiently formed in the image recording layer.
The absorbance of the image forming layer can be controlled through an amount of the infrared absorbing agent added in the image recording layer and a thickness of the image-recording layer. The absorbance can be measured according to a standard method. Examples of the measurement method include a method where, on a reflective substrate such as aluminum, an image recording layer having a thickness where a dry coating amount is determined appropriately in a range necessary as a planographic printing plate is formed, followed by measuring the reflection density with an optical densitometer, and a method where according to a reflection method with an integral sphere a spectrophotometer is used to measure.
An amount added to the hydrophilic film (image recording layer) is preferably set in a range of 0.5 to 30% by mass and more preferably in a range of 1 to 15% by mass relative to a total amount of the hydrophilic film.

### Colorant

In the invention, various compounds other than the above-mentioned compounds may be further added if necessary. For example, dyes having large absorption in the visible light range can be used as colorants for an image. Specific examples of the colorants include Oil Yellow #101, Oil Yellow #103, Oil Pink #312, Oil Green BG, Oil Blue BOS, Oil Blue #603, Oil Black BY, Oil Black BS, Oil Black T-505 (which are manufactured by Orient Chemical Industries, Ltd.), Victoria Pure Blue, Crystal Violet (CI42555), Methyl Violet (CI42535), Ethyl Violet, Rhodamine B (CI145170B), Malachite Green (CI42000), Methylene Blue (CI52015), and the dyes disclosed in JP-A 62-293247 (the disclosure of which is incorporated herein by reference). The colorants are not limited to dyes and may be selected from pigments such as phthalocyanine pigments, azo pigments, carbon black and titanium oxide.
The addition of the colorants is preferable since the addition to the composition for forming the hydrophilic film of the invention enables easy differentiation between the image portion and the non-image portion after image formation. The amount of the colorant to be added is 0.01 to 10% by weight based on the total solid of the composition for forming the hydrophilic film of the invention.

### Printing-out agent

When the hydrophilic film of the invention is used for an image forming layer of a planographic printing plate, a compound that decolors by an acid or radical can be added to form a printing-out image. Examples of such compound effectively-used include various colorants such as diphenylmethane colorants, triphenylmethane colorants, thiazine colorants, oxazine colorants, xanthene colorants, anthraquinone colorants, iminoquinone colorants, azo colorants or azomethine colorants.

Specific examples include dyes such as brilliant green, ethyl violet, methyl green, crystal violet, basic fuchsine, methyl violet 2B, quinaldine red, rose bengal, methanyl yellow, thymolsulfophthalein xylenol blue, methyl orange, paramethyl red, congo red, benzopurpurin 4B, α-naphthyl red, nile blue 2B, nile blue A, methyl violet, maracaibo green, parafuchsine, victoria pure blue BOH [manufactured by Hodogaya Chemical Co., Ltd.], oil blue #603 [manufactured by Orient Chemical Co., Ltd.], oil pink #312 [manufactured by Orient Chemical Co., Ltd.], oil red 5B [manufactured by Orient Chemical Co., Ltd.], oil scarlet #308 [manufactured by Orient Chemical Co., Ltd.], oil red OG [manufactured by Orient Chemical Co., Ltd.], oil red RR [manufactured by Orient Chemical Co., Ltd.], oil green #502 [manufactured by Orient Chemical Co., Ltd.], spironred BEH special [manufactured by Hodogaya Chemical Co., Ltd.], m-cresol purple, cresol red, rhodamine B, rhodamine 6G, sulforhodamine B, auramine, 4-p-diethylaminophenyliminonaphthoquinone, 2-carboxyanilino-4-p-diethylaminophenyliminonaphthoquinone, 2-carboxystearylamino-4-p-N,N-bis(hydroxyethyl)aminophenyliminonaphthoquinone, 1 -phenyl-3-methyl-4-p-diethylaminophenylimino-5-pyrazolone and 1-β-naphthyl-4-p-diethylaminophenylimino-5-pyrazolone, leuco dyes such as p,p',p"-hexamethyltriaminotriphenylmethane (leuco crystal violet) and Pergascript Blue SRB (manufactured by Ciba Geigy).

In addition to the above-mentioned dyes, leuco dyes, which are known as a material for thermosensitive paper and pressure sensitive paper, are also exemplified as preferred examples. Specific examples include crystalviolet lactone, maracaibo green lactone, benzoyl leuco methylene blue, 2-(N-phenyl-N-methylamino)-6-(N-p-tolyl-N-ethyl)aminofluorane, 2-anilino-3-methyl-6-(N-ethyl-p-toluidino)fluorane, 3,6-dimethoxyfluorane, 3-(N,N-diethylamino)-5-methyl7-(N,N-dibenzylamino)fluorane, 3-(N-cyclohexyl-N-methylamino)-6-methyl-7-anilinofluorane, 3-(N,N-diethylamino)-6-methyl-7-anilinofluorane, 3-(N,N-diethylamino)-6-methyl-7-xylidinofluorane, 3-(N,N-diethylamino)-6-methyl-7-chlorofluorane, 3-(N,N-diethylamino)-6-methoxy-7-aminofluorane, 3-(N,N-diethylamino)-7-(4-chloroanilino)fluorane, 3-(N,N-diethylamino)-7-chlorofluorane, 3-(N,N-diethylamino)-7-benzylaminofluorane, 3-(N,N-diethylamino)-7,8-benzofluorane, 3-(N,N-dibutylamino)-6-methyl-7-anilinofluorane, 3-(N,N-dibutylamino)-6-methyl-7-xylidinofluorane, 3-piperidino-6-methyl-7-anilinofluorane, 3-pyrrolidino-6-methyl-7-anilinofluorane, 3,3-bis(1-ethyl-2-methylindol-3-yl)phthalide, 3,3-bis(1-n-butyl-2-methylindol-3-yl)phthalide, 3,3-bis(p-dimethylaminophenyl)-6-dimethylaminophthalide, 3-(4-diethylamino-2-ethoxyphenyl)-3-(1-ethyl-2-methylindol-3-yl)-4-azaphthalide and 3-(4-diethylaminophenyl)-3-(1 -ethyl-2-methylindol-3-yl)phthalide.

An amount of the dye that decolors by an acid or radical to be added is preferably in a range of 0.01 to 10% by mass based on the solid portion in the composition for forming the hydrophilic film.

As described above, a planographic printing plate precursor can be obtained by having the material that can change from hydrophilic to hydrophobic by imparting energy contained in the hydrophilic film according to the invention.
Writing of an image is conducted by imagewisely imparting energy so that only a region where the energy is imparted is changed from hydrophilic to hydrophobic so as to form an ink receiving image portion. In general, the image writing (image formation) is conducted by using heat. Specific examples thereof include a direct imagewise recording with a thermal recording head, a scanning exposure with an infrared laser, a high-illuminance flush exposure with a xenon lamp and an exposure with an infrared lamp. Exposure with a semiconductor laser that radiates infrared rays in a wavelength range of 700 to 1200 and exposure with a solid high-power infrared laser such as YAG laser are preferable.

In an imagewise exposed-planographic printing plate, an exposed region becomes an image portion that is a hydrophobic ink receiving region and an unexposed region becomes a non-image portion which receives dampening water. Accordingly, the planographic printing plate can be mounted on a printer and used to print according to an ordinary procedure with ink and the dampening water without applying a particular development process.
In order to make the difference between the hydrophilic region and the hydrophobic region therein clear and to improve the durability of the hydrophilic region, energy endowment such as post-heating can be preferably applied. The post-heating is preferably applied at a temperature from 80 to 200°C by using a non-contact heating unit such as a panel heater or a Wisconsin Oven for 15 sec to 10 min. Specific examples of the post-heating process include a process which includes heating the plate at a temperature from 100 to 160°C for 1 to 8 min by using a panel heater.

Alternatively, the planographic printing plate precursor according to the invention can be subjected to an on-machine development by a process including mounting the precursor on a cylinder of a printing press, exposing the precursor with a laser mounted on the press, and applying dampening water and/or ink as mentioned in JP 2938398 B.
Thus obtained planographic printing plate according to the invention can be directly used for printing by supplying ink and dampening water thereto without undergoing any development process after image exposure. Since the hydrophilic region that constitutes a non-image portion is excellent in the hydrophilicity and the durability, planographic printing plate according to the invention can provide many sheets of high quality printed matter free from stains on the non-image portion.

### Ink Jet Recording Method and Ink Jet Recording Apparatus

As another planographic printing plate preparation method where, in a planographic printing material formed by forming a hydrophilic film according to the invention on a substrate, a hydrophobic region is formed to obtain a planographic printing plate, a planographic printing plate preparation method where an ink jet recording method is applied can be cited.
That is, without containing a material that changes from hydrophilic to hydrophobic owing to energy endowment in a hydrophilic film according to the invention, a hydrophobic material is directly applied on a hydrophilic film with an ink jet recording method to form a hydrophobic region, and thereby a planographic printing plate having a hydrophilic/hydrophobic region is obtained.
Hereinafter, an ink jet recording method and an ink jet recording apparatus that can be preferably adopted in a preparation method of a planographic printing plate according to the invention will be described.

Preferable examples of an ink composition that is used in an ink jet recording method include an ink composition that does not permeate in a recording medium and is cured on a surface. Specific examples thereof include a so-called solid ink, that is mainly made of wax and is liquid at the time of ink discharge and immediately hardens on a recording medium, and a UV-curable ink, that contains a polymerizing polymer, a polymerization initiator and a colorant, and is polymerized and cured owing to irradiation of UV after the ink sticks to a recording medium.

In the ink-jet recording method, the ink composition is preferably discharged by being heated to 40 to 80°C in advance so that the viscosity of the ink composition is lowered to 7 to 30 mPa·s. When the method is used, high discharge stability can be realized. In general, since most of the radiation-curable ink composition has higher viscosity than aqueous ink, a range of viscosity fluctuation owing to temperature variation during printing is larger.
The viscosity fluctuation of the ink composition directly largely affects on a liquid drop size and a liquid drop discharge speed so as to cause image deterioration. Accordingly, the temperature of the ink composition is necessarily kept constant as far as possible during printing.
A control range of the temperature of the ink composition is preferably set to a preset temperature ± 5°C, more preferably to a preset temperature ± 2°C, and still more preferably to a preset temperature ± 1°C.
One characteristics of the ink jet recording apparatus is being provided with a device for stabilizing a temperature of the ink composition. The device keeps all of piping systems and members which reside in a range from an ink tank to a discharge surface in a constant temperature.
A method of controlling the temperature is not particularly restricted. Preferable examples thereof include providing pluraltemperature sensors to respective piping sites for thermally controlling the temperature in accordance with a flow rate of the ink composition and an environmental temperature.
Further, a head unit for heating is preferably thermally shielded or insulated so as not to be thermally affected by a printer body or external air. In order to shorten a printer rise-up time required for heating, or in order to reduce the loss of thermal energy, insulation from other sites is preferably applied and a heat capacity of the whole heating unit is preferably made smaller.

In the next place, irradiation conditions of radiation will be described. A basic irradiation method is disclosed in JP-A No. 60-132767. Specifically, irradiation is conducted by disposing light sources on both sides of the head unit and scanning the head and the light sources by a shuttle method. Irradiation is carried out after a certain time after the ink is landed on a recording medium.
Further, curing is brought to completion with a separate light source that works without being driven. WO99/54415 discloses an irradiation method that uses an optical fiber and an irradiation method including impinging a collimated light source on a mirror disposed on a side surface of a head unit to irradiate UV light to a recording portion. The invention can use these irradiation methods.
The ink composition used in the invention is desirably heated to a constant temperature, and a time between landing and irradiation therefor is desirably set in a range of 0.01 to 0.5 sec, preferably in a range of 0.01 to 0.3 sec, and more preferably in a range of 0.01 to 0.15 sec. When the time from the landing of the ink to irradiation is controlled to a very short time like these, the landed ink can be inhibited from running before curing. Further, even a porous recording medium can be exposed before the ink composition permeates to a depth where the light source does not reach. Accordingly, remaining of unreacted monomers are prevented so as to result in reducing odor.

According to the method for forming the planographic printing plate according to the invention, a planographic printing plate can be readily obtained by forming a hydrophobic region, which accords with a resolving power of the ink-jet printer, on a surface of the planographic printing material. That is, the planographic printing plate obtained according to the method according to the invention can be directly subjected for printing by supplying ink and dampening water without applying any development process,.
Since the planographic printing material according to the invention has an excellent hydrophilic surface, a planographic printing plate obtained by forming therein a hydrophobic region with a hydrophobic material such as solid ink or UV-curable ink is excellent in the hydrophilicity and the durability in the non-image portion. Accordingly, the planographic printing plate provides many high-quality printed matters free from stains on the non-image portion.
Is is noted that this application claims priority from Japanese Patent Application Nos. 2005-45648, 2005-98790 and 2006-23364, the disclosures of which are incorporated by reference herein.

### EXAMPLES

The present invention will be specifically explained by way of Examples below, but the invention is not limited by them.

### Examples 1 to 7 and Comparative examples 1 to 2

### Example 1

### Preparation of Hydrophilic film

A hydrophilic film-forming coating solution composition 1 was prepared so as to have the following formulation. Hydrophilic film-forming coating solution composition 1
- Carrageenan 1.0 g
- Cross-linking agent 1 0.1 g
- Distilled water 50 g

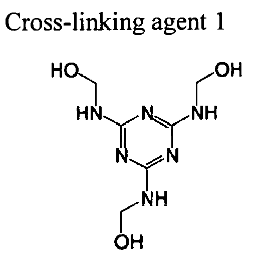

The hydrophilic film-forming coating solution composition 1 was coated on a glass plate (manufactured by Kabushiki Kaisha Endo Kagaku) so that a dry coating amount thereof becomes 0.6 g/m², and dried at 130°C for 4 minutes so as to form a hydrophilic film on the substrate.

### Evaluation of Hydrophilicity

A surface of the obtained hydrophilic film was rubbed 100 times with a wet non-woven fabric (trade name: BEMCOT, manufactured by Asahi Kagaku Senni Corp.), and a contact angle (water drop contact angle in air) was measured before and after that with a contact angle meter (trade name: CA-Z, manufactured by Kyowa Interface Science Co.,). A surface of the member was observed after the rubbing. The surface of hydrophilic film was not peeled off after the rubbing and no visually confirmable flaws were caused. It was confirmed that the hydrophilic film according to Example 1 had sufficient strength to the abrasion.
Furthermore, the contact angle was 5.2° before the rubbing and 5.5° after the rubbing. It was confirmed that sufficient hydrophilicity was exhibited even after the rubbing and the hydrophilic film according to the invention was excellent in the wear resistance.

### Examples 2 to 5

### Preparation of Planographic Printing Plate Precursor

### (1) Preparation of Substrate

### Aluminum Plate

A purifying process was applied to a molten metal of an aluminum alloy made of 99.5% by mass or more of Al, 0.30% by mass of Fe, 0.10% by mass of Si, 0.02% by mass of Ti, 0.013% by mass of Cu and the balance of unavoidable impurities, followed by casting. As the purifying process, a degassing process was applied to eliminate unnecessary gases such as hydrogen in the molten metal, followed by applying a ceramic tube-filtering process. The casting method was a DC casting method. A surface of a solidified ingot having a plate thickness of 500 mm was faced by 10 mm followed by applying a homogenizing process at 550°C for 10 hr so that an intermetallic compound might not be coarsened. In the next place, a hot rolling was applied at 400°C, followed by applying the intermediate annealing at 500°C for 60 sec in a continuous annealing furnace, further followed by applying the cold rolling, and thereby an aluminum rolled plate having a thickness of 0.30 mm was obtained. By controlling the roughness of a rolling roll, the center line average roughness Ra after the cold rolling was controlled to 0.2 µm. Thereafter, in order to improve the planarity, the rolled plate was subjected to a tension leveler. The obtained aluminum plate was supplied to a surface processing below.

In the beginning, in order to remove a rolling oil on a surface of the aluminum plate, a degreasing process was applied with an aqueous solution containing 10% by mass of sodium aluminate at 50°C for 30 sec, followed by applying a neutralizing and a desmutting process with an aqueous solution containing 30% by mass of nitric acid at 50°C for 30 sec.
Subsequently, in order to improve an adhesiveness between an image recording layer and a substrate and to impart the water retention property to a non-image portion, a surface roughening process was applied. Specifically, with a web of an aluminum plate passing through an aqueous solution containing 1% by mass nitric acid and 0.5% by mass aluminum nitrate (liquid temperature was 45°C) supplied in an indirect feeding cell, at a current density of 20 A/dm² and with an alternating wave-form having a duty-ratio of 1: 1, electrolysis was applied so that an amount of electricity when the aluminum plate was a positive electrode might be 240 C/dm², and thereby an electrochemical surface roughening process was applied.
Furthermore, with an aqueous solution containing 10% by mass of sodium hydroxide, an etching process was applied at 35°C for 30 sec, followed by applying a neutralizing process and desmutting process at 50°C for 30 sec with a 30% by mass sulfuric acid aqueous solution.

Thereafter, in order to improve a wear resistance, a chemical resistance and water retention properties, an anodic oxidation was applied thereto. Specifically, with a web of an aluminum plate passing through an aqueous solution containing 20% by mass sulfuric acid (liquid temperature was 35°C) supplied to an indirect feeding cell, electrolysis was applied with a direct current of a current density of 14 A/dm², and thereby an anodic oxidation film of 2.5 g/m² was prepared.
Thereafter, in order to secure the hydrophilicity of the non-image portion, a silicate process was applied at 70°C for 15 sec with a 1.5% by mass #3 sodium silicate aqueous solution. An amount of adhered Si was 10 mg/m². Thereafter, a washing process was applied and thereby a substrate was obtained. The center average roughness Ra of the obtained substrate was 0.25 µm.

### (2) Formation of Image recording layer

An image recording layer-coating solution 1 having the following formulation was coated on the substrate with a wire bar and dried by using an oven. A planographic printing plate precursor, which has an image recording layer having a dried amount of 0.9 g/m², was thus obtained.

Image recording layer-coating solution 1
- Hydrophilic polymer (as shown in Table 1) 2.0 g
- Water 100 g
- Microcapsules ((1) or (2): as shown in Table 1) (in terms of solid content) 1.8 g
- Surfactant (sodium salt of diethylhexyl sulfosuccinate) 0.01 g
- Cross-linking agent (2) 0.35 g

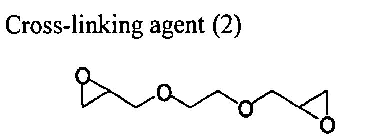

**Table 1**

| | Specific hydrophilic compound or Comparative compound | Microcapsules |
|---|---|---|
| Example 2 | Sodium salt of carboxymethyl cellulose | (1) |
| Example 3 | Carrageenan | (1) |
| Example 4 | Carrageenan | (2) |
| Example 5 | Sodium alginate | (2) |
| Example 6 | Carboxymethyl starch | (2) |
| Comparative example 1 | Polyacrylic acid | (2) |

### Synthesis of Microcapsule (1)

In addition to oil-phase components of 10 g of trimethylolpropane adduct of xylene diisocyanate (trade name: Takenate D-110N, manufactured by Sankyo-Takeda Chemical Co., Ltd.), 3.15 g of pentaerythritol triacrylate (trade name: SR-444, manufactured by Nippon Kayaku Co., Ltd.), 0.35 g of an infrared absorbing agent (1) below, 1 g of 3-(N,N-diethylamino)-6-methyl-7-anilinofluoran (trade name: ODB, manufactured by Yamamoto Kasei Co., Ltd.), 0.75 g of a polymerization initiator (1) below, and 0.1 g of calcium dodecylbenzene sulfonate (trade name: Pionin A-41C , manufactured by Takemoto Oil & Fat Co., Ltd.) were dissolved in 17 g of ethyl acetate. As an aqueous-phase component, 40 g of an aqueous solution containing 4% by mass of carboxylic acid-modified polyvinyl alcohol (trade name: KL-506, manufactured by Kuraray Co., Ltd.) was prepared. The oil-phase components and the aqueous-phase component were mixed and emulsified with a homogenizer at 12,000 rpm for 10 min. Thus obtained emulsion was added to 25 g of distilled water, followed by agitating at room temperature for 30 min, further followed by agitating at 40°C for 3 hr. Thus obtained microcapsule solution (1) was diluted with distilled water so that a solid concentration becomes 20% by mass. Thus, microcapsules (1) having an average particle diameter of 0.4 µm were prepared.

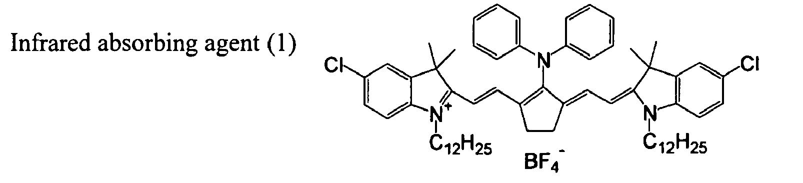

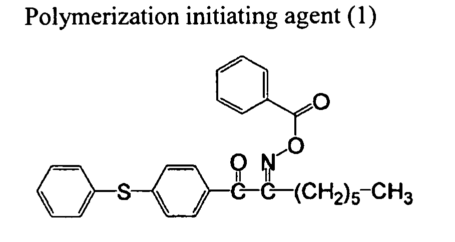

### Synthesis of Microcapsule (2)

### Example of Synthesis of Hydrophilic Polymer (1) (hydrophilic polymer having at least one active hydrogen group that reacts with an isocyanate group at one end of the polymer)

After 50 g of acrylamide and 5 g of 2-mercaptoethylene aminate were dissolved in 100 g of ethanol, the mixture was heated to 60°C under a nitrogen atmosphere, followed by adding 0.5 g of a thermal polymerization initiator 2,2-azobisisobutyl nitrile (AIBN) and reacting for 6 hr. After the reaction, white precipitate was filtered and thoroughly washed with methanol, and thereby 48 g of a hydrophilic polymer (1) terminated with aminate was obtained. (Molecular weight: 2.2 × 10³).

In addition to oil-phase components of 10 g of trimethylolpropane adduct of xylene diisocyanate (trade name: Takenate D-110N, manufactured by Sankyo-Takeda Chemical Co., Ltd.), 4.5 g of pentaerythritol triacrylate (trade name: SR-444, manufactured by Nippon Kayaku Co., Ltd.), 1.5 g of the above-described infrared absorbing agent (1), 0.5 g of 3-(N,N-diethylamino)-6-methyl-7-anilinofluoran (trade name: ODB, manufactured by Yamamoto Kasei Co., Ltd.), 0.75 g of the above-described polymerization initiator (1), and 0.1 g of calcium dodecylbenzene sulfonate (trade name: Pionin A-41C , manufactured by Takemoto Oil & Fat Co., Ltd.) were dissolved in 17 g of ethyl acetate. An aqueous-phase component was prepared by adding 33 g of water to 1.5 g of the hydrophilic polymer (1) formed in the synthesis example land 0.7 g of 1N aqueous solution of sodium hydroxide. The oil-phase components and the aqueous-phase component were mixed and emulsified with a homogenizer at 12,000 rpm for 10 min. Thus obtained emulsion was added to 25 g of distilled water, followed by agitating at room temperature for 30 min, further followed by agitating at 60°C for 2 hr. Thus obtained microcapsule solution (1) was diluted with distilled water so that a solid concentration becomes 15% by mass. Thus, microcapsules (2) having an average particle diameter of 0.3 µm were prepared.

### Comparative example 1

A planographic printing plate precursor of Comparative example 1 was prepared in the same manner as in Examples 2 to 5, except that polyacrylic acid was used in place of the hydrophilic polymer in the image recording layer-coating solution 1.

### Example 6

An image recording layer-coating solution 2 having the following formulation was coated on a substrate which is similar to that used in Examples 2 to 5 with a wire bar and dried by using an oven at 100°C for 10 minutes. A planographic printing plate precursor, which has an image recording layer having a dried amount of 0.9 g/m², was thus obtained. Image recording layer-coating solution 2
- Hydrophilic polymer (carboxymethylated starch) 1.9 g
- Water 100 g
- Microcapsules (2) (in terms of solid content) 1.6 g
- Surfactant (sodium salt of diethylhexyl sulfosuccinate 0.01 g
- Cross-linking agent (glyoxal: HOCCOH) 0.30 g

### (3) Exposure and Printing

The obtained planographic printing plate precursors according to examples 2 through 6 and comparative example 1 each were exposed with an exposure machine (trade name: TRENDSETTER 3244VX, manufactured by Creo) equipped with a water-cooled 40W infrared semiconductor laser under conditions of an energy output of 9W, outer drum rotation speed of 210 rpm and the resolving power of 2400 dpi. The exposed image had a fine line chart. The obtained exposed printing plate precursor was, without subjecting to a development process, loaded on a cylinder of a printer (trade name: SOR-M, manufactured by Heiderberg). With dampening water (etching solution (trade name: EU-3, manufactured by Fuji Photo film): water: isopropyl alcohol = 1: 89: 10 (by volume ratio)) and black ink (trade name: TRANS-G (N), manufactured by Dainippon Ink and Chemicals), after the dampening water was supplied, 500 paper sheets were printed at a speed of 6,000 sheets per hour. Thereafter, ink was once adhered on a surface of the plate, the dampening water was supplied, and the number of printed paper sheets until the ink was freed from on the plate surface and the stains of the non-image portion of the printed matter became not to occur any more was counted. Thereafter, printing was continued until stains were caused.

### Example 7

### Preparation and Printing by using Planographic printing plate formed by Ink jet recording method

A hydrophilic film-forming coating solution 2 having the following formulation was coated on a substrate which is similar to that used in Examples 2 to 6 and dried by using an oven at 130°C for 4 minutes so as to obtain a hydrophilic film having a dried amount of 0.7 g/m². Hydrophilic film-forming coating solution 2
- Carrageenan 1.0 g
- Cross-linking agent (2) (shown below) 0.1 g
- Distilled water 50 g

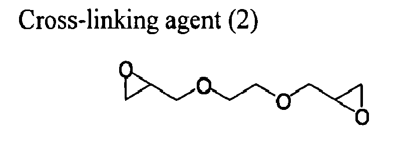

A planographic printing plate of Example 7 was then prepared by forming an image portion (hydrophobic ink-receiving portion) with a black ink for solid ink jet printing containing a wax as a main component by an ink jet printer (trade name: PM-9000, manufactured by Seiko Epson Corporation).
The obtained planographic printing plate of Example 7 was loaded on a cylinder of a printer (trade name: SOR-M, described above). With dampening water (etching solution (trade name: EU-3, manufactured by Fuji Photo film): water: isopropyl alcohol = 1: 89: 10 (by volume ratio)) and black ink (trade name: TRANS-G (N), manufactured by Dainippon Ink and Chemicals), after the dampening water was supplied, 500 paper sheets were printed at a speed of 6,000 sheets per hour. Thereafter, ink was once adhered on a surface of the plate, the dampening water was supplied, and the number of printed paper sheets until the ink was freed from on the plate surface and the stains of the non-image portion of the printed matter became not to occur any more was counted.

### Comparative example 2

A planographic printing plate of Comparative example 2 was prepared in the same manner as in Example 7, except that polyacrylic acid was used in place of the hydrophilic polymer in the hydrophilic film-forming coating solution 2.

### Evaluation of Planographic Printing Plate

Each of the printing of the planographic printing plates according to Examples 2 through 7 and Comparative examples 1 and 2 was evaluated in terms of stains on a non-image portion and an ink repellency were evaluated as shown below. Results are shown in Table 2 below.

### (1) Stains on Non-image Portion

At the time of 500 paper sheets after start of the printing, an amount of adhered ink in the non-image portion of the printed matter was visually evaluated. A state where the ink was not at all left and the stains were not caused is denoted with A and a state where any ink was observed adhered is denoted with B.

### (2) Ink Repellency

The printing was carried out according to the above-mentioned method, and the number of the ink repellency was counted. The more excellent in the hydrophilicity, the less the number of ink-repelled paper sheets.

**Table 2**

| | Stains on Non-image Portion | Ink Repellency |
|---|---|---|
| Example 2 | A | 35 |
| Example 3 | A | 30 |
| Example 4 | A | 25 |
| Example 5 | A | 30 |
| Example 6 | A | 25 |
| Example 7 | A | 25 |
| Comparative example 1 | B | Not less than 100 |
| Comparative example 2 | B | Not less than 100 |

### Examples 8 to 15 and Comparative examples 3 and 4

### Example 8

### Formation of Hydrophilic film

The following components were uniformly mixed and stirred at a room temperature for 2 hrs so as to cause a hydrolysis. A hydrophilic film-forming coating solution composition 3 was thus obtained. Hydrophilic film-forming coating solution composition 3
- (A) Carrageenan 12 g
- (B) Tetramethoxysilane (cross-linking component) 30 g
- Ethanol 250 g
- Water 750 g
- Aqueous solution of nitric acid (1N) 10 g

The hydrophilic film-forming coating solution composition 3 was coated onto an aluminum substrate which was prepared in the same manner as in Examples 2 to 5 and dried by using an oven at 100°C for 10 minutes so as to obtain a hydrophilic film having a dried amount of 1.0 g/m².

### Evaluation of Hydrophilicity

A surface of the obtained hydrophilic film of Example 8 was rubbed and observed after the rubbing in the same manner as in Example 1. The surface of hydrophilic film was not peeled off after the rubbing and no visually confirmable flaws were caused. It was confirmed that the hydrophilic film according to Example 8 had sufficient strength to the abrasion.
Furthermore, the contact angle was 8.6° before the rubbing and 8.1 after the rubbing. It was confirmed that sufficient hydrophilicity was exhibited even after the rubbing and the hydrophilic film according to the invention was excellent in the wear resistance.

### Example 9

### Formation of Hydrophilic film

The following components were uniformly mixed and stirred at a room temperature for 2 hrs so as to cause a hydrolysis. A hydrophilic film-forming coating solution composition 4 was thus obtained. Hydrophilic film-forming coating solution composition 4
- (A) Carboxymethylcellulose 12 g
- (B) Tetramethoxysilane (cross-linking component) 30 g
- (C-1) Hydrophilic polymer (shown below) 4 g
- Ethanol 250 g
- Water 750 g
- Aqueous solution of nitric acid (1N) 10 g

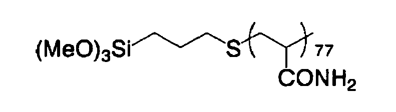

A hydrophilic film was coated on a substrate so as to prepare Example 9 in the same manner as Example 8 except that the hydrophilic film-forming coating solution composition 4 was used in place of the hydrophilic film-forming coating solution composition 3. The thus obtained Example 9 was evaluated in the same manner as Example 8 so as to turn out that the hydrophilic film of Example 9 has a sufficient strength against wearing.
Furthermore, the contact angle was 7.8° before the rubbing and 7.6° after the rubbing. It was confirmed that sufficient hydrophilicity was exhibited even after the rubbing and the hydrophilic film of Example 9 according to the invention was excellent in the wear resistance.

### Examples 10 to 13

The image recording layer-coating solution 3 having the following formulation was coated onto an aluminum substrate which was prepared in the same manner as in Examples 2 to 5 with a bar and dried by using an oven at 140°C for 2 minutes so as to obtain an image recording layer having a dried amount of 0.9 g/m². Planographic printing plate precursors of Examples 10 to 13 were thus prepared. Image recording layer-coating solution 3
- (A) Specific hydrophilic compound (as shown in Table 3) 1.0 g
- (B) Tetramethoxysilane 1.1 g
- Water 90 g
- Methanol 25 g
- Microcapsules ((1) or (2): as shown in Table 3) (in terms of solid content) 1.6 g
- Surfactant (sodium salt of diethylhexyl sulfosuccinate) 0.01 g
- 1N hydrochloric acid 10 g

**Table 3**

| | (A) Specific hydrophilic compound or Comparative compound | Microcapsules |
|---|---|---|
| Example 10 | Sodium salt glucuronic acid | (1) |
| Example 11 | Carboxymethyl cellulose | (1) |
| Example 12 | Alginic acid | (2) |
| Example 13 | Carrageenan | (2) |
| Comparative example 3 | Poly(hydroxyetyl methacrylate) | (1) |

### Example 14

Planographic printing plate precursor of Examples 14 was prepared in the same manner as Examples 10 to 13 except that the image recording layer-coating solution 4 having the following formulation was used in place of the image recording layer-coating solution 3.

Image recording layer-coating solution 4
- (A) Carboxymethylcellulose 0.8 g
- (B) Tetramethoxysilane 1.4 g
- (C-1) Specific Hydrophilic polymer (the compound used in Example 9) 0.2 g
- Water 90 g
- Methanol 25 g
- Microcapsule (1) (in terms of solid content) 1.8 g
- Surfactant (sodium salt of diethylhexyl sulfosuccinate) 0.01 g
- 1N hydrochloric acid 10 g

### Comparative example 3

Planographic printing plate precursor of Comparative example 3 was prepared in the same manner as Example 10 except that poly(hydroxymethymethacrylate) was used in place of the (A) specific hydrophilic compound in the image recording layer-coating solution 3.

### Exposure and Printing

The planographic printing plate precursor of Examples 10 to 14 and Comparative example 3 were exposed in the same manner as in Examples 2 to 6 and Comparative example 1 and used for printing until stains were caused thereby.

### Example 15

### Preparation and Printing by using Planographic printing plate formed by Ink jet recording method

The hydrophilic film-forming coating solution composition 5 having the following formulation was coated onto an aluminum substrate which was prepared in the same manner as in Examples 10 to 14 and dried by using an oven at 130°C for 4 minutes so as to obtain an image recording layer having a dried amount of 0.7 g/m². Planographic printing plate material of Example 15 was thus prepared. Hydrophilic film-forming coating solution composition 5
- (A) Carboxymethylcellulose 11.5 g
- (B) Tetramethoxysilane (cross-linking component) 30 g
- (C-1) Hydrophilic polymer (shown below) 4.5 g
- Ethanol 250 g
- Water 850 g
- Aqueous solution of nitric acid (1N) 10 g

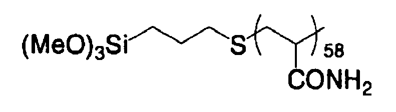

The thus obtained planographic printing plate material was used as a hydrophilic substrate of a planographic printing plate of Example 15 in the same manner as in Example 7. The thus obtained planographic printing plate was used for printing until stains were caused thereby. A number of thus printed sheets was counted.

### Comparative example 4

The planographic printing plate of Comparative example 4 was prepared and used for printing in the same manner as in Example 15, except that polyvinyl alcohol was used in place of the carboxymethylcellulose in the hydrophilic film-forming coating solution composition 5.

### Evaluation of Planographic printing plate

Each of the printing of the planographic printing plates of Examples 10 to 15 and Comparative examples 3 and 4 was evaluated in terms of stains on a non-image portion and an ink repellency were evaluated in the same manner as in Examples 2 to 7 and Comparative examples 1 and 2. Results are shown in Table 4 below.

**Table 4**

| | Method of recording | Stains on Non-image Portion | Ink Repellency |
|---|---|---|---|
| Example 10 | Hydrophobilized precursor | A | 30 |
| Example 11 | Hydrophobilized precursor | A | 30 |
| Example 12 | Hydrophobilized precursor | A | 25 |
| Example 13 | Hydrophobilized precursor | A | 20 |
| Example 14 | Hydrophobilized precursor | A | 25 |
| Comparative example 3 | Hydrophobilized precursor | B | Not less than 100 |
| Example 15 | Ink jet | A | 15 |
| Comparative example 4 | Ink jet | B | Not less than 70 |

As is obvious from Tables 2 and 4, the present invention prepared with the specific hydrophilic film provides excellent hydrophilicity, durability of the non-image portion, stain-free characteristics in the non-image portion ink repellency in both embodiments of the planographic printing plate that was formed by containing a material that changes from hydrophilic to hydrophobic by imparting energy to the hydrophilic film was used as shown in Examples 2 through 6 and 10 through 14, and the planographic printing plate that does not contain the compound in the hydrophilic film and an image portion was formed by means of the ink-jet recording method as shown in Examples 7 and 15.

### Examples 16 to 20

### Preparation of Surface Hydrophilic Member

Examples 16 to 20 were formed by coating each of the following hydrophilic coating liquid compositions B-1 to B-5 on a substrate of a glass plate (manuafctured by Endo Scientific Instrument Co., Ltd.) so that the drying amount thereof became 2 g/m², and heat-drying was performed at 100°C for 10 minutes so as to form a hydrophilic layer on the substrate.
In order to prepare the hydrophilic coating liquid compositions B-1 to B-5 having a sol-like form, components in each of the following formulation were uniformly mixed and stirred at normal temperature for 2 hours.

Hydrophilic coating liquid composition B-1
- (A) Carboxymethyl cellulose 12 g
- (B) Tetramethoxysilane (crosslinking component) 30 g
- (C-1) Hydrophilic polymer (shown below) 4 g
- Ethanol 250 g
- Water 750 g
- Aqueous solution of nitric acid (1N) 10 g

Hydrophilic polymer for Hydrophilic coating liquid composition B-1

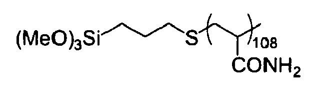

Hydrophilic coating liquid composition B-2
- (A) Carageenan 15 g
- (B) Tetramethoxysilane (crosslinking component) 31 g
- Ethanol 250 g
- Water 750 g
- Aqueous solution of hydrochloric acid 10g

Hydrophilic coating liquid composition B-3
- (A) Alginic acid 12 g
- (B) Tetramethoxytitanium (crosslinking component) 30 g
- (C-1) Hydrophilic polymer (shown below) 4 g
- Ethanol 250 g
- Water 750 g
- Aqueous solution of hydrochloric acid (1N) 10 g

Hydrophilic polymer for Hydrophilic coating liquid composition B-3

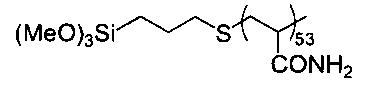

Hydrophilic coating liquid composition B-4
- (A) Carboxymethyl cellulose 12 g
- (B) Tetraethoxyzirconium (crosslinking component) 30 g
- (C-1) Hydrophilic polymer (shown below) 4 g
- Ethanol 250 g
- Water 750 g
- Aqueous solution of hydrochloric acid (1N) 10 g

Hydrophilic polymer for Hydrophilic coating liquid composition B-4

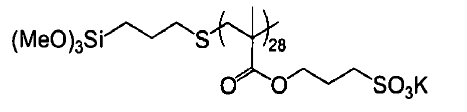

Hydrophilic coating liquid composition B-5
- (A) Carboxymethyl cellulose 12 g
- (B) Tetraethoxysilane (crosslinking component) 30 g
- (C-1) Hydrophilic polymer (shown below) 4 g
- Ethanol 250 g
- Water 750 g
- Acetylacetonato Titanium 10 g

Hydrophilic polymer for Hydrophilic coating liquid composition B-5

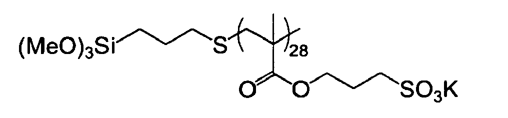

### Comparative example 5

Comparative example 5 was prepared in the same manner as Example 16, except that hydrophilic coating liquid composition B'-1, which has the same formulation as that of the hydrophilic coating liquid composition B-1 except that polyvinyl alcohol was used in place of carboxymethyl cellulose, was used in place of the hydrophilic coating liquid composition B-1.

### Evaluation of Surface Hydrophilic Member

### Evaluation of Rub-resistance property

Each of Examples 16 to 20 and Comparative example 5 was rubbed 100 times by using a nonwoven fabric cloth (trade name: BEMCOT, manufactured by Asahi Kasei Corporation), and a difference between a contact angle before the rubbing and a contact angle after the rubbing was measured by using a contact angle measuring apparatus (trade name: DROPMASTER 500, manufactured by Kyowa Interface Science Co., Ltd.) It is understood that as smaller the difference of the contact angle, the more excellent in Rub-resistance due to few deterioration in hydrophilicity. Evaluation criteria were provided as follows.
A: The difference between a contact angle before the rubbing and a contact angle after the rubbing was 1° or less.
B: The difference between a contact angle before the rubbing and a contact angle after the rubbing was more than 1° and equal to or less than 2°.
X: The difference between a contact angle before the rubbing and a contact angle after the rubbing was more than 2°.

### Evaluation of Defogging property

Each of Examples 16 to 20 and Comparative example 5 was subjected to water vapor for 1 minure under fluorescent light in a room at daytime and aparted from the water vapor so as to be placed in a condition of a temperature of 25°C and RH of 10%. Then, visual observation for measuring a degree of fogging and change thereof with respect to each example was performed under the same illuminating condition as described above. Evaluation criteria were provided as follows.
A: No fogging was observed.
B: Though fogging was observed, it erases within 10 seconds.
X: Fogging was not erased after 10 seconds passsed.

### Evaluation of Stain-preventative property

Each of Examples 16 to 20 and Comparative example 5 was subjected to drawing of lines by using an oil based ink marker (manufactured by Mistubishi Pencil Co., Ltd.) and continuous pouring of water. Evaluation criteria were provided as follows.
A: Ink was removed within 1 minute.
B: Ink was removed after 1 minute passsed.
X: Ink was not removed even when continuous pouring of water was performed for 10 minutes.
Results of the evaluations of Rub-resistance property, defogging property and stain-preventative property are shown in the following Table 5.

**Table 5**

| Sample No. | Hydrophilic coating liquid composition | Results | | |
|---|---|---|---|---|
| | | Rub-resistance | Defogging property | Stain-preventative property |
| Example 16 | B-1 | A | A | A |
| Example 17 | B-2 | A | B | A |
| Example 18 | B-3 | A | A | A |
| Example 19 | B-4 | A | A | A |
| Example 13 | B-5 | A | A | A |
| Comparative example 5 | B'-1 | A | X | X |

As is apparent from Table 5, the hydrophilic films formed by using the hydrophilic compositions of the present invention provided excellent Rub-resistance property, defogging property and stain-preventative property. In contrast, the hydrophilic film of Comparative example 5 exhibited insufficient Rub-resistance property, defogging property and stain-preventative property, and deemed to be in a practically unacceptable level.

## Claims

1. A hydrophilic film obtained by curing, by at least one energy source selected from heat and light, a composition comprising a compound that has, in a molecule thereof, two or more ring structures selected from the group consisting of five-membered structures and six-membered structures, wherein the ring structures have a hydrophilic group.

2. The hydrophilic film of claim 1, wherein the composition further comprises a cross-linking agent.

3. The hydrophilic film of claim 2, wherein the cross-linking agent is an alkoxide compound comprising an element selected from the group consisting of Si, Ti, Zr and Al.

4. The hydrophilic film of claim 3, further comprising a cross-linking structure, wherein the cross-linking structure is formed by hydrolytic polycondensation of the compound having the ring structures and the alkoxide compound.

5. The hydrophilic film of any one of claims 1 to 4, wherein the composition comprises a hydrophilic polymer.

6. The hydrophilic film of claim 5, wherein the hydrophilic polymer is a hydrophilic polymer comprising a structure represented by the following Formula (1): 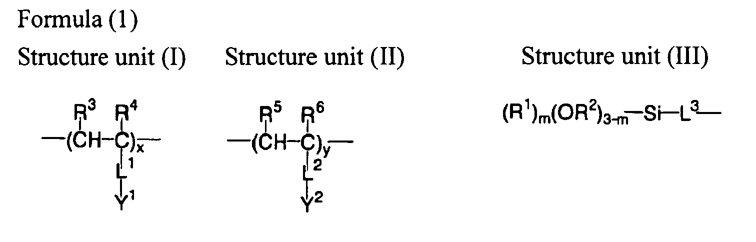 wherein a silane coupling group represented by Structure unit (III) is present at an end of a polymer made of a polymer unit represented by Structure unit (I) or (II); each of R¹, R², R³, R⁴, R⁵ and R⁶ independently represents a hydrogen atom or a hydrocarbon group having 1 to 8 carbon atoms; m represents 0, 1 or 2; n represents an integer from 1 through 8; x and y represent composition ratios when x + y = 100; a ratio of x:y is in a range of 100:0 to 1:99; each of L¹, L² and L³ independently represents a single bond or an organic linking group; and each of Y¹ and Y² independently represents -N(R⁷)(R⁸), -OH, -NHCOR⁷, -COR⁷, -CO₂M or -SO₃M, wherein each of R⁷ and R⁸ independently represents a hydrogen atom or a hydrocarbon group having 1 to 8 carbon atoms and M represents a hydrogen atom, an alkaline metal, an alkaline earth metal or onium.

7. The hydrophilic film of claim 6, wherein the hydrophilic film comprises a cross-linking structure, and the cross-linking structure is formed by hydrolytic polycondensation of at least one energy source selected from the group consisting of the compound having the ring structures, the alkoxide compound as defined in claim 3, and the hydrophilic polymer comprising the structure of Formula (1).

8. The hydrophilic film of any one of claims 1 to 7, which further comprises a material that is changed from hydrophilic to hydrophobic by imparting energy.

9. The hydrophilic film of any one of claims 1 to 7, which further comprises a material that is changed from hydrophilic to hydrophobic by imparting at least one energy source selected from heat and light.

10. The hydrophilic film of any one of claims 1 to 7, which further comprises a material that is changed from hydrophilic to hydrophobic by imparting heat.

11. A planographic printing material, which comprising a substrate and a hydrophilic film of any one of claims 1 to 10.

12. A method for forming a planographic printing plate comprising forming an ink receiving portion on a planographic printing material by applying a hydrophobic material by an ink jet recording process, wherein the planographic printing material comprises a substrate and a hydrophilic film of any one of claims 1 to 10.

13. A stain-preventative member comprising a substrate and the hydrophilic film of any one of claims 1 to 6.

14. A defogging member comprising a substrate and the hydrophilic film of any one of claims 1 to 6.
